# EUROPEAN PATENT APPLICATION

(11) **EP 4 339 338 A2**
(43) Date of publication of application: **20.03.2024**
(21) Application number: 23159380.7
(22) Date of filing: 01.03.2023
(51) Int. Cl.: C25B 15/08, C25B 9/67

(54) **ELECTROLYTIC DEVICE**

(30) Priority: 16.09.2022 JP 2022148606
(71) Applicant: KABUSHIKI KAISHA TOSHIBA, Minato-ku Tokyo 105-0023 (JP)
(72) Inventor: ONO, Akihiko, Tokyo, 105-0023 (JP); KIYOTA, Yasuhiro, Tokyo, 105-0023 (JP); MIKOSHIBA, Satoshi, Tokyo, 105-0023 (JP); KITAGAWA, Ryota, Tokyo, 105-0023 (JP)
(74) Representative: Hoffmann Eitle

(57) **Abstract**

An electrolytic device includes: a humidifier to humidify a cathode gas; a cathode discharge flow path through which a cathode fluid flows; an anode collector to separate an anode fluid into an anode discharge liquid and an anode exhaust gas; a first cooler to cool the anode exhaust gas to condense water vapor in the anode exhaust gas to produce a anode condensed water; a first flow path connecting the anode collector and an anode supply flow path, the first flow path through which the anode solution flows from the anode collector to the anode supply flow path; a second flow path through which the anode condensed water flows from the condensed water collector to the humidifier; and a first heat exchange structure to exchange heat between the anode solution through the first flow path and the anode condensed water through the second flow path.

## Description

### FIELD

Arrangements relate to an electrolytic device.

### BACKGROUND

Lately, there has recently been a concern about the depletion of fossil fuel such as petroleum and coal, and expectations are increasing for sustainable renewable energy. Examples of the renewable energy include those by a solar battery and wind power generation. The amount of power generated by these depends on weather and nature conditions, and thus they have a problem of difficulty in stably supplying the power. Therefore, it has been attempted to store, in a storage battery, the power generated from the renewable energy, so as to stabilize the power. Storing the power has problems of the cost of the storage battery and the occurrence of loss during the power storage.

In response to this point, attention has been focused on an electrolytic device that uses power generated from renewable energy to electrolyze water (H₂O) to produce hydrogen (H₂) from the water or electrochemically reduces carbon dioxide (CO₂) to convert it into a chemical substance (chemical energy) such as a carbon compound such as carbon monoxide (CO), formic acid (HCOOH), methanol (CH₃OH), methane (CH₄), acetic acid (CH₃COOH), ethanol (C₂H₅OH), ethane (C₂H₆), or ethylene (C₂H₄). Storing these chemical substances in a cylinder or a tank has advantages of being lower in energy storage cost and smaller in storage loss than storing the power (electric energy) in the storage battery.

As the electrolytic device, for example, there is cited a configuration including a cathode flow path facing a cathode, an anode flow path facing an anode, and a separator arranged between the cathode flow path and the anode flow path. When an electrolytic reaction is performed for a long period of time by using the electrolytic device having such a configuration and making a constant current flow through the cathode and the anode, for example, there are problems of deterioration of cell performance over time, such as a decrease in a production amount and an increase in cell voltage. Therefore, there is a need for an electrolytic device capable of inhibiting the deterioration of cell performance over time.

### RELEVANT REFERENCES

### Non-patent Reference

Reference 1: Zengcal Liu et al., Journal of CO2 Utilization, 15, p. 50-56 (2015)
Reference 2: Sinchao Ma et al., Journal of The Electrochemical Society, 161 (10), F1124-F1131(2014)

### BRIEF DESCRIPTION OF THE DRAWINGS

FIG. 1 is a schematic view for explaining a configuration example of an electrolytic device according to a first arrangement;
FIG. 2 is a schematic view for explaining another structure example of an electrolytic part 100;
FIG. 3 is a schematic view for explaining another structure example of the electrolytic part 100;
FIG. 4 is a schematic view illustrating an example of a planar structure of a flow path plate 114 including an anode flow path 112;
FIG. 5 is a schematic view illustrating an example of a planar structure of a flow path plate 153 including a cooling flow path 141;
FIG. 6 is a schematic view illustrating another example of the planar structure of the flow path plate 153 including the cooling flow path 141;
FIG. 7 is a schematic view illustrating another example of the planar structure of the flow path plate 153 including the cooling flow path 141;
FIG. 8 is a schematic view for explaining a configuration example of an electrolytic device according to a second arrangement;
FIG. 9 is a schematic view for explaining a configuration example of an electrolytic device according to a third arrangement;
FIG. 10 is a schematic view for explaining a configuration example of an electrolytic device according to a fourth arrangement;
FIG. 11 is a schematic view for explaining a configuration example of an electrolytic device according to a fifth arrangement;
FIG. 12 is a schematic view for explaining a configuration example of an electrolytic device according to a sixth arrangement;
FIG. 13 is a schematic view for explaining a configuration example of an electrolytic device according to a seventh arrangement; and
FIG. 14 is a schematic view for explaining a configuration example of an electrolytic device according to an eighth arrangement.

### DETAILED DESCRIPTION

An electrolytic device, includes:
an anode configured to oxidize a first substance and thus produce an oxidation product;
a cathode configured to reduce a second substance and thus produce a reduction product;
an anode flow path facing on the anode;
a cathode flow path facing on the cathode;
an anode supply flow path connected to an inlet of the anode flow path and configured to supply an anode solution containing the first substance to the anode flow path;
an anode discharge flow path through which an anode fluid flows, the anode fluid being configured to be discharged from an outlet of the anode flow path, and the anode fluid containing the anode solution and the oxidation product;
a cathode gas supply source configured to supply a cathode gas including the second substance;
a humidifier configured to humidify the cathode gas;
a cathode supply flow path connected to an inlet of the cathode flow path and configured to supply the humidified cathode gas to the cathode flow path;
a cathode discharge flow path through which a cathode fluid flows, the cathode fluid being configured to be discharged from an outlet of the cathode flow path, and the cathode fluid including the cathode gas and the reduction product;
an anode collector configured to separate the anode fluid to be supplied from the anode discharge flow path into an anode discharge liquid including the anode solution and an anode exhaust gas including the oxidation product;
a first cooler configured to cool the anode exhaust gas supplied from the anode collector to condense a first water vapor in the anode exhaust gas to produce a anode condensed water;
a condensed water collector configured to accommodate the anode condensed water;
a first flow path connecting the anode collector and the anode supply flow path, the first flow path through which the anode solution flows from the anode collector to the anode supply flow path;
a second flow path connecting the condensed water collector and the humidifier, the second flow path through which the anode condensed water flows from the condensed water collector to the humidifier; and
a first heat exchange structure configured to exchange heat between the anode solution flowing through the first flow path and the anode condensed water flowing through the second flow path.

Hereinafter, there will be explained electrolytic devices in arrangements with reference to the drawings. In the arrangements, substantially the same components are denoted by the same reference numerals, and a description thereof may be partly omitted. The drawings are schematic, and a relation between thickness and planar dimension, a thickness ratio among parts, and so on may be different from actual ones.

In this specification, "connection" includes not only direct connection but also indirect connection, unless otherwise specified.

### (First arrangement)

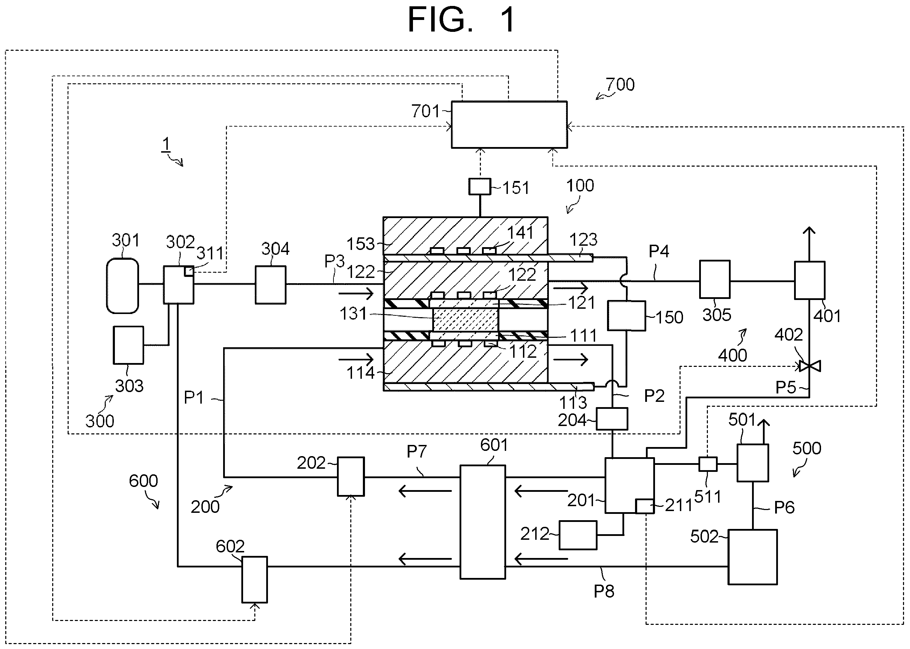

FIG. 1 is a schematic view for explaining a configuration example of an electrolytic device in a first arrangement. An electrolytic device 1 includes an electrolytic part 100, an anode supply part 200, a cathode supply part 300, a cathode discharge part 400, a cooling part 500, a circulation part 600, and a control part 700.

The electrolytic part 100 includes an anode 111, an anode flow path 112, an anode current collector 113, a cathode 121, a cathode flow path 122, a cathode current collector 123, a separator 131, a cooling flow path 141, a power supply 150, and a detector 151. The anode 111, the anode flow path 112, the cathode 121, the cathode flow path 122, and the separator 131 constitute an electrolysis cell. Examples of the electrolysis cell include a carbon dioxide electrolysis cell and a nitrogen electrolysis cell.

The anode supply part 200 includes an anode collector 201, a flow rate controller 202, a flow rate controller 205, a heat exchanger 206, and a flow rate controller 207.

The cathode supply part 300 includes a cathode gas supply source 301, a humidifier 302, a water supply source 303, a flow rate controller 304, and a pressure controller 305.

The cathode discharge part 400 includes a cathode collector 401 and a valve 402.

The cooling part 500 includes a cooler 501 and a condensed water collector 502.

The circulation part 600 includes a heat exchanger 601 and a flow rate controller 602.

The control part 700 includes a control device 701.

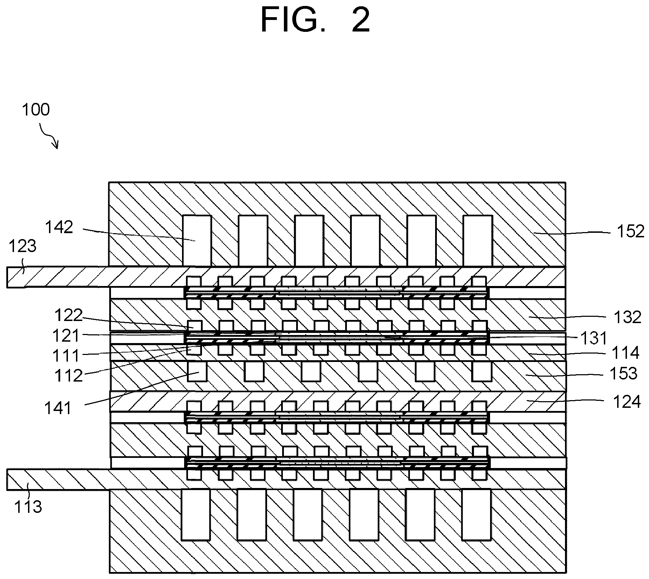

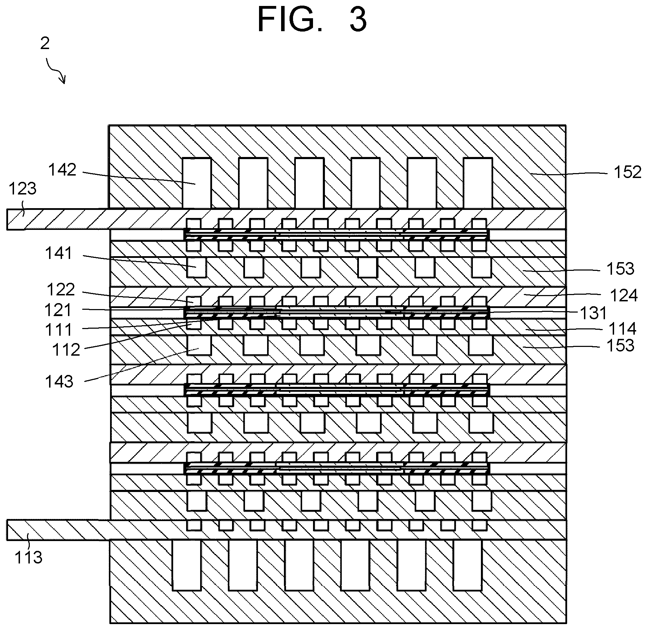

FIG. 2 is a schematic view for explaining another structure example of the electrolytic part 100. FIG. 3 is a schematic view for explaining another structure example of the electrolytic part 100. The electrolytic part 100 can also include a plurality of electrolysis cells, as illustrated in FIG. 2 and FIG. 3. A plurality of the electrolysis cells may be sandwiched between, for example, a pair of not-illustrated support plates and further tightened with bolts or the like.

The anode 111 is in contact with the separator 131. The anode 111 is an electrode for oxidizing a substance to be oxidized to produce an oxidation product. The anode 111 is an electrode for oxidizing, for example, water of the substance to be oxidized to produce oxygen (O₂) or hydrogen ions (H⁺) of the oxidation product, or oxidizing hydroxide ions (OH⁻) produced by the reduction reaction of a substance to be reduced at the cathode 121 to produce oxygen or water.

The anode 111 preferably contains a catalyst material capable of reducing an overvoltage in the above-described oxidation reaction (anode catalyst material). Examples of such a catalyst material include metals such as platinum (Pt), palladium (Pd), and nickel (Ni), alloys containing those metals, intermetallic compounds, binary metal oxides such as manganese oxide (Mn-O), iridium oxide (Ir-O), nickel oxide (Ni-O), cobalt oxide (Co-O), iron oxide (Fe-O), tin oxide (Sn-O), indium oxide (In-O), ruthenium oxide (Ru-O), lithium oxide (Li-O), and lanthanum oxide (La-O), ternary metal oxides such as Ni-Co-O, Ni-Fe-O, La-Co-O, Ni-La-O, and Sr-Fe-O, quaternary metal oxides such as Pb-Ru-Ir-O and La-Sr-Co-O, and metal complexes such as a Ru complex and a Fe complex.

The anode 111 includes a base material having a structure capable of making a liquid or ions move between the separator 131 and the anode flow path 112, which is, for example, a porous structure such as a mesh material, a punching material, a porous body, or a metal fiber sintered body. The base material may be formed of a metal such as titanium (Ti), nickel (Ni), or iron (Fe), or a metal material such as an alloy containing at least one of these metals (for example, SUS), or may be formed of the above-described anode catalyst material. When an oxide is used as the anode catalyst material, it is preferable to form a catalyst layer by attaching or stacking the anode catalyst material to or on a surface of the base material formed of the above-described metal material. The anode catalyst material preferably has nanoparticles, a nanostructure, a nanowire, or the like for increasing the oxidation reaction. The nanostructure is a structure with nanoscale irregularities formed on the surface of the catalyst material.

The cathode 121 is in contact with the separator 131. The cathode 121 is an electrode (reduction electrode) for causing a reduction reaction of a substance to be reduced to produce a reduction product. Examples of the substance to be reduced include carbon dioxide, nitrogen, and so on. Examples of the reduction product include carbon compounds and ammonia. Examples of the carbon compound include carbon monoxide, formic acid (HCOOH), ethane, ethylene, methanol, acetic acid (CH₃COOH), ethanol, propanol (C₃H₇OH), and ethylene glycol (C₂H₆O₂). The reduction reaction at the cathode 121 may include a side reaction that causes a reduction reaction of water to produce hydrogen (H₂), along with the reduction reaction of the substance to be reduced.

The cathode 121 includes a gas diffusion layer and a cathode catalyst layer provided on the gas diffusion layer. A porous layer denser than the gas diffusion layer may be arranged between the gas diffusion layer and the cathode catalyst layer. The gas diffusion layer is arranged on the cathode flow path 122 side, and the cathode catalyst layer is arranged on the separator 131 side. The cathode catalyst layer may enter the gas diffusion layer. The cathode catalyst layer preferably has catalyst nanoparticles, a catalyst nanostructure, or the like. The gas diffusion layer is formed of, for example, a carbon paper, a carbon cloth, or the like, and may be subjected to a water repellent treatment. The porous layer is formed of a porous body with a smaller pore size than the carbon paper or the carbon cloth.

With the application of a moderate water repellent treatment to the gas diffusion layer, a substance gas to be reduced reaches the cathode catalyst layer mainly by gas diffusion. The reduction reaction of the substance to be reduced and the reduction reaction of the carbon compound produced by the reduction reaction occur near the boundary between the gas diffusion layer and the cathode catalyst layer, or near the cathode catalyst layer that has entered the gas diffusion layer.

The cathode catalyst layer is preferably formed of a catalyst material capable of reducing an overvoltage in the above-described reduction reaction (cathode catalyst material) when reducing carbon dioxide. Examples of such a material include metals such as gold (Au), silver (Ag), copper (Cu), platinum (Pt), palladium (Pd), nickel (Ni), cobalt (Co), iron (Fe), manganese (Mn), titanium (Ti), cadmium (Cd), zinc (Zn), indium (In), gallium (Ga), lead (Pb), and tin (Sn), metal materials such as alloys containing at least one of these metals and intermetallic compounds, carbon materials such as carbon (C), graphene, CNT (carbon nanotube), fullerene, and ketjen black, and metal complexes such as a Ru complex and a Re complex. The cathode catalyst layer can employ various shapes such as a plate shape, a mesh shape, a wire shape, a particle shape, a porous shape, a thin film shape, and an island shape.

The cathode catalyst layer may use a cathode catalyst material capable of reducing nitrogen to produce ammonia. Examples of such a material include molybdenum complexes. Examples of the molybdenum complex include molybdenum complexes (A) to (D) described below.

A first example includes (A) a molybdenum complex having N,N-bis(dialkylphosphinomethyl)dihydrobenzimidazolidene (where two alkyl groups may be the same or different and at least one hydrogen atom of the benzene ring may be substituted with an alkyl group, an alkoxy group, or a halogen atom) as a PCP ligand.

A second example includes (B) a molybdenum complex having 2,6-bis(dialkylphosphinomethyl)pyridine (where two alkyl groups may be the same or different and at least one hydrogen atom of the pyridine ring may be substituted with an alkyl group, an alkoxy group, or a halogen atom) as a PNP ligand.

A third example includes (C) a molybdenum complex having bis(dialkylphosphinomethyl)arylphosphine (where two alkyl groups may be the same or different) as a PPP ligand.

A fourth example includes (D) a molybdenum complex expressed by trans-Mo(N₂)₂(RIR2R3P)₄ (where R1, R2, R3 are alkyl groups or aryl groups that may be the same or different, and two R3s may couple with each other to form an alkylene chain).

In the above molybdenum complexes, the alkyl group may be, for example, a methyl group, an ethyl group, a propyl group, a butyl group, a pentyl group, a hexyl group, or a straight-chain or branched-chain alkyl group of their structural isomers, or a cyclic alkyl group such as a cyclopropyl group, a cyclobutyl group, a cyclopentyl group, or a cyclohexyl group. The carbon number of the alkyl group is preferably 1 to 12, and more preferably 1 to 6. The alkoxy group may be, for example, a methoxy group, an ethoxy group, a propoxy group, a butoxy group, a pentoxy group, a hexyloxy, or a straight-chain or branched-chain alkoxy group of their structural isomers, or a cyclic alkoxy group such as a cyclopropoxy group, a cyclobutoxy group, a cyclopentoxy group, or a cyclohexyloxy group. The carbon number of the alkoxy group is preferably 1 to 12, and more preferably 1 to 6. Examples of the halogen atom include a fluorine atom, a chlorine atom, a bromine atom, an iodine atom, and so on.

The molybdenum complex of (A) includes a molybdenum complex expressed, for example, by the following Formula (A1). 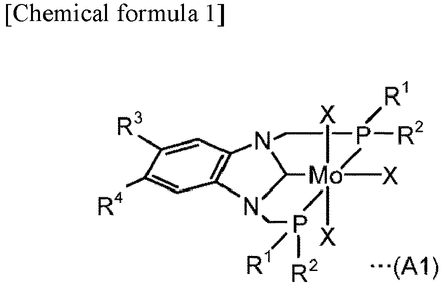 (in the formula, R1 and R2 are alkyl groups that may be the same or different, and X is an iodine atom, a bromine atom, or a chlorine atom, and at least one hydrogen atom on the benzene ring may be substituted with an alkyl group, an alkoxy group, or a halogen atom)

Examples of the alkyl group, the alkoxy group, and the halogen atom include the same as those already exemplified. R1 and R2 are each preferably a bulky alkyl group (for example, a tert-butyl group or an isopropyl group). It is preferable that the hydrogen atom on the benzene ring is not substituted, or the 5-position and 6-position hydrogen atoms are substituted with 1-12C chain, cyclic, or branched alkyl groups.

Examples of the molybdenum complex of (B) include molybdenum complexes expressed, for example, by the following Formula (B 1), Formula (B2), and Formula (B3). 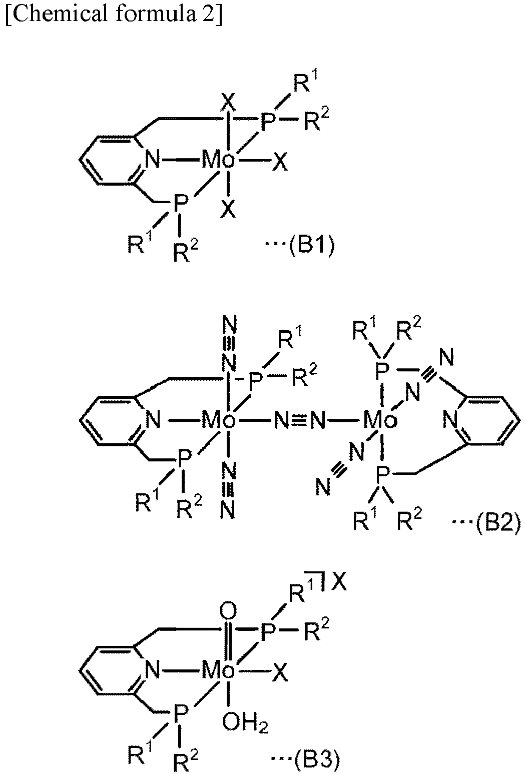 (in the formulas, R1 and R2 are alkyl groups that may be the same or different, and X is an iodine atom, a bromine atom, or a chlorine atom, and at least one hydrogen atom on the pyridine ring may be substituted with an alkyl group, an alkoxy group, or a halogen atom)

Examples of the alkyl group, the alkoxy group, and the halogen atom include the same as those already exemplified. R1 and R2 are each preferably a bulky alkyl group (for example, a tert-butyl group or an isopropyl group). It is preferable that the hydrogen atom on the pyridine ring is not substituted, or the 4-position hydrogen atom is substituted with a 1-12C chain, cyclic, or branched alkyl group.

The molybdenum complex of (C) includes a molybdenum complex expressed, for example, by the following Formula (C1). 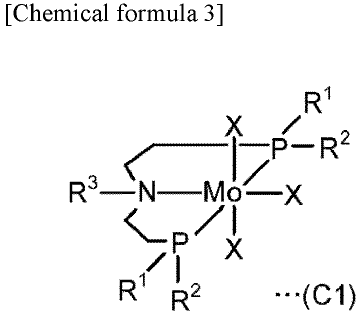 (in the formula, R1 and R2 are alkyl groups that may be the same or different, R3 is an aryl group, and X is an iodine atom, a bromine atom, or a chlorine atom)

Examples of the alkyl group include the same as those already exemplified. Examples of the aryl group include a phenyl group, a tolyl group, a xylyl group, a naphthyl group, and those each having at least one of cyclic hydrogen atoms substituted with an alkyl group or a halogen atom, and so on. Examples of the alkyl group and the halogen atom include the same as those already exemplified. R1 and R2 are each preferably a bulky alkyl group (for example, a tert-butyl group or an isopropyl group). R3 is preferably, for example, a phenyl group.

Examples of the molybdenum complex of (D) include molybdenum complexes expressed, for example, by the following Formula (D1) and Formula (D2). 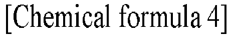 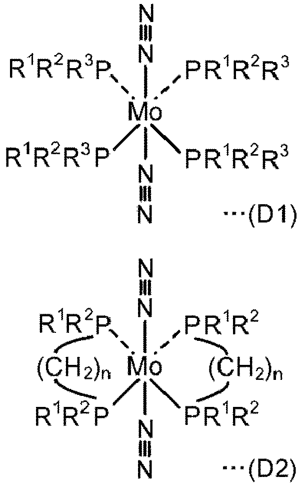 (in the formulas, R1, R2, and R3 are alkyl groups or aryl groups that may be the same or different, and n is 2 or 3)

Examples of the alkyl group and the aryl group include the same as those already exemplified. In Formula (D1), it is preferable that R1 and R2 are aryl groups (for example, phenyl groups) and R3 is a 1-4C alkyl group (for example, a methyl group) or that R1 and R2 are 1-4C alkyl groups (for example, methyl groups) and R3 is an aryl group (for example, a phenyl group). In Formula (D2), it is preferable that R1 and R2 are aryl groups (for example, phenyl groups) and n is 2.

The cathode catalyst material forming the cathode catalyst layer preferably has nanoparticles of the above-described metal material, a nanostructure of the metal material, a nanowire of the metal material, or a composite body in which nanoparticles of the above-described metal material are supported on a carbon material such as carbon particles, a carbon nanotube, or graphene. Applying catalyst nanoparticles, a catalyst nanostructure, a catalyst nanowire, a catalyst nano-support structure, or the like as the cathode catalyst material makes it possible to increase the reaction efficiency of the reduction reaction of the substance to be reduced at the cathode 121.

The anode flow path 112 faces on the anode 111. The anode flow path 112 is where an anode solution containing a substance to be oxidized flows, and has a function of supplying the substance to be oxidized to the anode 111.

The anode solution is preferably a solution containing at least water (H₂O) of the substance to be oxidized. The anode solution may contain or does not need to contain a substance to be reduced because the substance to be reduced is supplied from the cathode flow path 122.

The anode solution may be an electrolytic solution containing an electrolyte. Examples of the electrolytic solution include aqueous solutions containing at least one selected from hydroxide ions (OH⁻), hydrogen ions (H⁺), potassium ions (K⁺), sodium ions (Na⁺), lithium ions (Li⁺), chloride ions (Cl⁻), bromide ions (Br⁻), iodide ions (I⁻), nitrate ions (NO₃⁻), sulfate ions (SO₄²⁻), phosphate ions (PO₄²⁻), borate ions (BO₃³⁻), and hydrogen carbonate ions (HCO₃⁻). In order to reduce the electrical resistance of the anode solution, an alkali solution in which an electrolyte such as potassium hydroxide or sodium hydroxide is dissolved with a high concentration is preferably used as a liquid. However, when the substance to be reduced dissolves into the anode solution, the anode solution may gradually change to neutral. A large amount of alkaline solution is required in order to perform the electrolytic reaction continuously, and thus there are corrosive concerns and sustainability issues. Therefore, if an electrolytic solution near neutrality is used, the substance to be reduced such as carbon dioxide is saturated and the electrolytic solution with the same pH can always be used.

The anode flow path 112 is provided on a surface of a flow path plate 114. Examples of the material of the flow path plate 114 include a material having low chemical reactivity and no conductivity. Examples of such a material include insulating resin materials such as an acrylic resin, polyether ether ketone (PEEK), and a fluorocarbon resin. The flow path plate 114 has screw holes for tightening, which are not illustrated.

The cathode flow path 122 faces on the cathode 121. The cathode flow path 122 is where a cathode gas containing a substance to be reduced flows, and has a function of supplying the substance to be reduced to the cathode 121.

The cathode flow path 122 is provided on a surface of a flow path plate 124. As the material of the flow path plate 124, it is preferable to use a material having low chemical reactivity and high conductivity. Examples of such a material include metal materials such as Ti and SUS, carbon, and so on. The flow path plate 124 has an inlet and an outlet of the cathode flow path 122 and screw holes for tightening, which are not illustrated. Further, a not-illustrated packing is sandwiched at the front and the back of each of the flow path plates as necessary.

The separator 131 includes an ion exchange membrane capable of making ions move between the anode 111 and the cathode 121 and separating the anode 111 and the cathode 121. Examples of the ion exchange membrane include cation exchange membranes such as Nafion and Fremion, and anion exchange membranes such as Neosepta and Selemion. Besides the ion exchange membrane, a glass filter, a porous polymer membrane, a porous insulating material, or the like may be applied to the separator 131 as long as the material is capable of making ions move between the anode 111 and the cathode 121.

The anode 111 and the cathode 121 can be connected to the power supply 150. Examples of the power supply 150 are not limited to ordinary system power supplies or batteries, but may include a power source configured to supply power generated by renewable energy such as solar cells or wind power generation. The power supply 150 may further include a power controller configured to control a voltage between the anode 111 and the cathode 121 by adjusting the output of the above-described power supply. The power supply 150 may be provided outside the electrolytic device 1.

The detector 151 includes at least one of a thermometer to measure the temperature of the electrolysis cell and an ammeter or voltmeter including a reference electrode to measure the voltage difference of voltages (cell voltages) or current (cell current) between the anode 111 and the cathode 121. The detector 151 does not necessarily have to be provided.

The inlet of the anode flow path 112 is connected to an anode supply flow path P1. The outlet of the anode flow path 112 is connected to an anode discharge flow path P2. The anode supply flow path P1 and the anode discharge flow path P2 are formed of a pipe, for example.

The inlet of the cathode flow path 122 is connected to a cathode supply flow path P3. The outlet of the cathode flow path 122 is connected to a cathode discharge flow path P4. The cathode supply flow path P3 and the cathode discharge flow path P4 are formed of a pipe, for example.

The anode flow path 112 and the cathode flow path 122 can be provided on both surfaces of the flow path plate 132, as illustrated in FIG. 2. The flow path plate including flow paths on both surfaces is also referred to as a bipolar flow path plate.

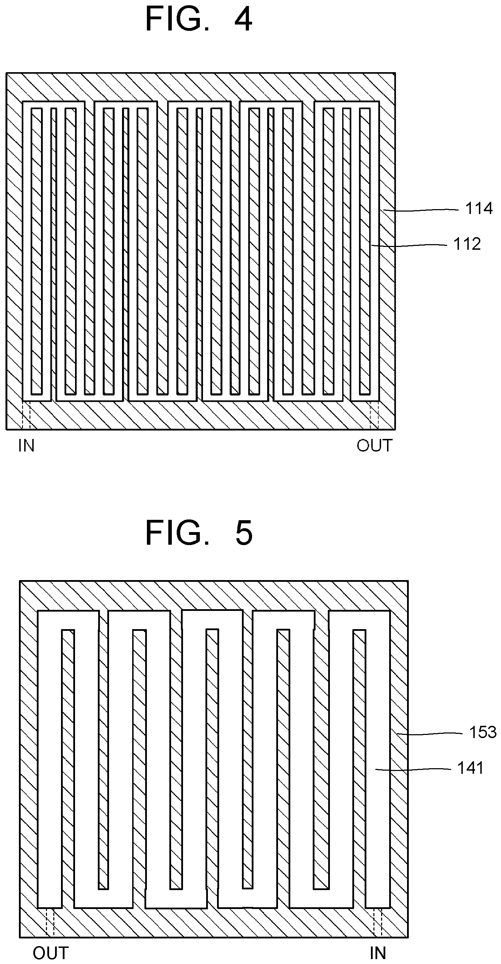

FIG. 4 is a schematic view illustrating an example of a planar structure of the flow path plate 114 including the anode flow path 112. The anode flow path 112 includes an inlet IN and an outlet OUT provided in the flow path plate 114. The anode flow path 112 has a serpentine shape on the surface of the flow path plate 114, and the region between folded portions branches. The above shape makes it possible to efficiently supply the above liquid to the anode flow path 112. Similarly to the anode flow path 112, the cathode flow path 122 may also have such a serpentine shape as illustrated in FIG. 4.

The cooling flow path 141 is where cooling water for cooling the electrolysis cell flows. The cooling flow path 141 is arranged opposite to the anode flow path 112 or the cathode flow path 122, for example. For example, the cooling flow path 141 may be provided on the opposite side of the anode 111 relative to the anode flow path 112. The cooling flow path 141 may be provided on the opposite side of the cathode 121 relative to the cathode flow path 122. The cooling flow path 141 may be connected in parallel to a not-illustrated cooling water supply source, for example, and the cooling water may be circulated while being cooled by the cooling water supply source. The cooling flow path 141 does not necessarily have to be provided.

FIG. 5 is a schematic view illustrating an example of a planar structure of a flow path plate 153 including the cooling flow path 141. The cooling flow path 141 includes an inlet IN and an outlet OUT provided in the flow path plate 153. The inlet IN of the cooling flow path 141 is closer to the outlet OUT of the anode flow path 112 than the inlet IN of the anode flow path 112, and the outlet OUT of the cooling flow path 141 is closer to the inlet IN of the anode flow path 112 than the outlet OUT of the anode flow path 112. Thus, for example, the anode fluid flow in the anode flow path 112 and the cooling flow in the cooling flow path 141 can be reversed. In the electrolysis operation, the anode solution is supplied into the electrolysis cell from the inlet IN of the anode flow path 112, the temperature increases inside the electrolysis cell, and the temperature increases at the outlet OUT of the anode flow path 112 where the anode fluid is discharged from the electrolysis cell, and thus, even inside the electrolysis cell, the temperature near the inlet is low and the temperature near the outlet is high. In contrast to this, by providing the inlet IN of the cooling flow path 141 on the outlet OUT side of the anode flow path 112, the temperature uniformity of the electrolysis cell can be improved.

The cooling flow path 141 has a serpentine shape on the surface of the flow path plate 153. The above shape makes it possible to efficiently supply the liquid containing water to the cooling flow path 141. The cooling efficiency can be enhanced by making the flow path width of the cooling flow path 141 wider than that of the anode flow path 112.

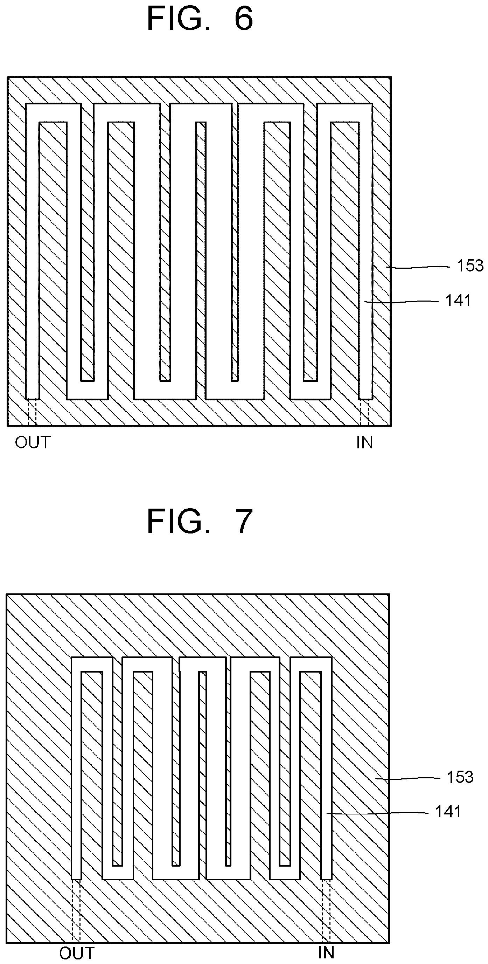

FIG. 6 is a schematic view illustrating another example of the planar structure of the flow path plate 153 including the cooling flow path 141. The cooling flow path 141 illustrated in FIG. 6 differs from the cooling flow path 141 illustrated in FIG. 5 in that the center portion and the peripheral portion of the cooling flow path 141 have different flow path widths. The flow path width of the cooling flow path 141 at the center portion is preferably wider than that of the cooling flow path 141 at the peripheral portion. This can enhance the cooling efficiency. The center portion of the electrolysis cell has small heat dissipation, and thus, the temperature tends to be high and the temperature of the peripheral portion of the electrolysis cell tends to drop.

FIG. 7 is a schematic view illustrating another example of the planar structure of the flow path plate 153 including the cooling flow path 141. The cooling flow path 141 illustrated in FIG. 7 differs from the cooling flow path 141 illustrated in FIG. 5 in that the cooling flow path 141 is provided at the center of the surface of the flow path plate 153, and the cooling flow path 141 is not provided at the outer peripheral portion surrounding the center. Further, the flow path width of the cooling flow path 141 at the center portion is preferably wider than that of the cooling flow path 141 at the peripheral portion. This can reduce the in-plane temperature distribution of the electrolysis cell.

The electrolytic part 100 may include a plurality of cooling flow paths. The electrolytic part 100 illustrated in FIG. 2 includes the cooling flow path 141 and a cooling flow path 142. The electrolytic part 100 illustrated in FIG. 3 includes the cooling flow path 141, the cooling flow path 142, and a cooling flow path 143. This arrangement is not limited to this, and the electrolytic part 100 can also include at least one of the cooling flow path 141, the cooling flow path 142, and the cooling flow path 143.

The cooling flow path 141 is provided on a surface of the flow path plate 153. The cooling flow path 142 is farther from the central electrolysis cell in the electrolytic part 100 than the cooling flow path 141. The cooling flow path 142 may be provided on the opposite side of the anode 111 relative to the anode current collector 113, for example, and face on the anode current collector 113. The cooling flow path 142 may be provided on the opposite side of the cathode 121 relative to the cathode current collector 123, for example, and face on the cathode current collector 123.

The cooling flow path 143 is provided on a surface of a flow path plate 153. The cooling flow path 143 is closer to the central electrolysis cell in the electrolytic part 100 than the cooling flow path 141. For example, the electrolysis cell at the end of the stack tends to have a low cell temperature due to a large amount of heat dissipation from a clamping plate, while the electrolysis cell at the center of the stack is likely to have a high temperature. Therefore, by making the flow path width of the cooling flow path 143 facing on the electrolysis cell at the center larger than that of the cooling flow path 141, the variation in the temperature of a plurality of the electrolysis cells can be suppressed. Further, by making the flow path depth of the cooling flow path 143 larger than that of the cooling flow path 141, the variation in the temperature of a plurality of the electrolysis cells may be suppressed.

Examples of materials of the flow path plate 153 and the flow path plate 152 include materials applicable to the flow path plate 114 and materials applicable to the flow path plate 124.

The anode collector 201 is connected to the anode discharge flow path P2. The anode collector 201 includes an anode tank capable of accommodating the anode fluid discharged from the anode flow path 112 and flowing through the anode discharge flow path P2, and an anode gas/liquid separator that separates the anode fluid into an anode discharge liquid and an anode exhaust gas. The anode discharge liquid contains the anode solution. The anode discharge liquid is returned to the anode supply flow path P1 through a circulation flow path P7 connecting the anode supply flow path P1 and the anode discharge flow path P2, and is reused as the anode solution. The anode exhaust gas contains oxidation products and water vapor. The anode exhaust gas may contain unreacted substances to be oxidized.

The anode collector 201 includes a detector 211. The detector 211 includes at least one of a concentration meter that measures the concentration of at least one ion in the anode fluid accommodated in the anode collector 201 and a water level gauge that measures the water level of the anode fluid accommodated in the anode collector 201 from the bottom of the anode collector 201. The detector 211 does not necessarily have to be provided.

The anode tank is connected to an electrolytic solution supply source 212. The electrolytic solution supply source 212 can resupply the electrolytic solution to the anode discharge liquid accommodated in the anode tank. The electrolytic solution supply source 212 does not necessarily have to be provided.

The flow rate controller 202 is provided in the middle of the anode supply flow path P1. The flow rate controller 202 includes, for example, a pump, and controls the flow rate of the anode solution supplied to the anode flow path 112 through the anode supply flow path P1.

The pressure controller 204 is provided in the middle of the anode discharge flow path P2. The pressure controller 204 controls the pressure in the anode flow path 112 by controlling the pressure in the anode discharge flow path P2.

The cathode gas supply source 301 includes a cylinder cabinet capable of accommodating a cathode gas containing a substance to be reduced, for example. The cathode gas contains carbon dioxide or nitrogen, for example.

The humidifier 302 is provided in the middle of the cathode supply flow path P3. The humidifier 302 can humidify the cathode gas. The humidifier 302 includes a tank capable of accommodating hot water, for example. The temperature of the hot water is not particularly limited, but is, for example, 50°C or more and 60°C or less. The humidifier 302 further includes a detector 311 that measures the water level of the hot water accommodated from the bottom of the tank. The detector 311 does not necessarily have to be provided. The humidifier 302 may include a heater.

The water supply source 303 can supply water such as hot water to the humidifier 302. The amount of water supplied from the water supply source 303 can be controlled using a valve provided in the middle of the flow path connecting the water supply source 303 and the humidifier 302, for example. The water supply source 303 does not necessarily have to be provided.

The flow rate controller 304 is provided after the humidifier 302 in the middle of the cathode supply flow path P3. The flow rate controller 304 includes, for example, a pump and can control the flow rate of the humidified cathode gas.

The pressure controller 305 is provided in the middle of the cathode discharge flow path P4. The pressure controller 305 can control the pressure in the cathode flow path 122 by controlling the pressure in the cathode discharge flow path P4.

The cathode collector 401 is connected to the cathode discharge flow path P4. The cathode collector 401 includes a tank capable of accommodating a cathode fluid discharged from the cathode flow path 122 and flowing through the cathode discharge flow path P4, and a gas/liquid separator that separates the cathode fluid into a cathode discharge liquid and a cathode exhaust gas. The cathode discharge liquid contains a substance to be reduced, a hydrogen gas by a side reaction, and water vapor. The cathode discharge liquid contains the anode solution in some cases. The cathode discharge liquid may contain unreacted substances to be reduced. The cathode exhaust gas may be collected externally from the cathode collector 401.

The valve 402 is provided in the middle of a circulation flow path P5 that connects the cathode collector 401 and the anode collector 201. By opening the valve 402, the cathode discharge liquid can be supplied from the cathode collector 401 to the anode collector 201. The circulation flow path P5 is formed of a pipe, for example. A pump may be provided in the middle of the circulation flow path P5.

The cooler 501 condenses the water vapor contained in the anode exhaust gas supplied from the anode collector 201 to produce water (anode condensed water). Oxygen products contained in the anode exhaust gas are collected as gas. The cooler 501 is provided in the middle of a flow path P6 connecting the anode collector 201 and the condensed water collector 502. The flow path P6 is formed of a pipe, for example. The cooler 501 may include double pipes.

The condensed water collector 502 includes a tank that accommodates the anode condensed water. The condensed water collector 502 is connected to the cooler 501.

The detector 511 can measure the temperature of the anode exhaust gas supplied to the cooler 501. The detector 511 is provided before the cooler 501 in the middle of the flow path P6, for example.

The heat exchanger 601 forms a heat exchange structure that exchanges heat between the anode solution of the anode discharge liquid flowing through the circulation flow path P7 connecting the anode supply flow path P1 and the anode discharge flow path P2 and the anode condensed water flowing through a circulation flow path P8 connecting the condensed water collector 502 and the humidifier 302. This makes it possible to cool the anode solution of the anode discharge liquid flowing through the circulation flow path P7 and heat the anode condensed water flowing through the circulation flow path P8. The heat exchange structure can be formed, for example, by connecting the circulation flow path P7 and the circulation flow path P8 with a heat exchange member. The circulation flow path P7 and the circulation flow path P8 are formed of a pipe, for example.

The flow rate controller 602 is provided in the middle of the circulation flow path P8. The flow rate controller 602 includes a pump that controls the flow rate of the anode condensed water supplied to the humidifier 302 through the circulation flow path P8, for example.

The control device 701 receives detection signals from, for example, the detector 151, the detector 211, the detector 311, and the detector 511 and transmits control signals to the flow rate controller 202, the valve 402, and the flow rate controller 602. The control device 701 is electrically connected to the respective components via bidirectional signal lines that are not illustrated partly, and these components are collectively controlled. Each pipe is provided with a not-illustrated valve, and the opening/closing operation of the valve may be controlled by a signal from the control device 701.

The control device 701 may be configured using hardware using a processor, or the like, for example. Each operation may be stored as an operation program in a computer-readable recording medium such as a memory, and each operation may be executed by appropriately reading the operation program stored in the recording medium by hardware.

Next, there is explained an example of an electrolysis method using the electrolytic device 1. In the example of the electrolysis method, the flow rate controller 202 and the pressure controller 204 are controlled to supply the anode solution to the anode flow path 112 through the anode supply flow path P1, the flow rate controller 304 and the pressure controller 305 are controlled to supply the cathode gas humidified by the humidifier 302 from the cathode gas supply source 301 to the cathode flow path 122 through the cathode supply flow path P3, and voltage is applied between the anode current collector 113 and the cathode current collector 123 from the power supply 150 to supply current to the anode 111 and the cathode 121.

When current is applied to the anode 111 and the cathode 121, the oxidation reaction near the anode 111 and the reduction reaction near the cathode 121 to be described below occur. Here, the case where carbon dioxide of the substance to be reduced is reduced to produce carbon monoxide (CO) of a reduction product is explained. However, the reduction product is not limited to carbon monoxide, and may also be other carbon compounds such as the aforementioned organic compounds or ammonia. Further, as the reaction process by the electrolysis cell, the case of producing mainly hydrogen ions (H⁺) and the case of producing mainly hydroxide ions (OH⁻) are considered, but the reaction process is not limited to either of these reaction processes.

There is described the reaction process in the case of mainly oxidizing water (H₂O) to produce hydrogen ions (H⁺). When current is supplied between the anode 111 and the cathode 121, the oxidation reaction of water (H₂O) occurs at the anode 111 in contact with the anode solution flowing through the anode flow path 112. Specifically, as illustrated in Expression (1) below, H₂O contained in the anode solution is oxidized to produce oxygen (O₂) and hydrogen ions (H⁺).

2H₂O → 4H⁺ + O₂ + 4e⁻ ... (1)

H⁺ produced at the anode 111 moves in the cathode gas in the cathode flow path 122 via the anode 111 and the separator 131 to reach near the cathode 121. Electrons (e⁻) based on the current supplied to the cathode 121 from the power supply 150 and H⁺ that has moved near the cathode 121 cause the reduction reaction of carbon dioxide (CO²). Specifically, as illustrated in Expression (2) below, CO₂ contained in the cathode gas supplied to the cathode 121 from the cathode flow path 122 is reduced to produce CO.

2CO₂ + 4H⁺ + 4e⁻ → 2CO + 2H₂O ... (2)

Next, there is explained the reaction process in the case of mainly reducing carbon dioxide (CO₂) to produce hydroxide ions (OH⁻). When current is supplied between the anode 111 and the cathode 121, water (H₂O) and carbon dioxide (CO₂) are reduced near the cathode 121 to produce carbon monoxide (CO) and hydroxide ions (OH⁻), as illustrated in Expression (3) below. The hydroxide ions (OH⁻) diffuse near the anode 111, and as illustrated in Expression (4) below, the hydroxide ions (OH⁻) are oxidized to produce oxygen (O₂).

2CO₂ + 2H₂O + 4e⁻ → 2CO + 4OH⁻ ... (3)

4OH⁻ → 2H₂O + O₂ + 4e⁻ ... (4)

Further, when nitrogen (N₂) of the substance to be reduced is reduced to produce ammonia (NH₃) of the reduction product, electrochemically water or hydroxide ions are oxidized near the anode 111 based on Expression (5) or (6) below to produce oxygen. Near the cathode 121, nitrogen is reduced based on Expression (7) or (8) below to produce ammonia.

3H₂O → 3/2O₂ + 6H⁺ + 6e⁻ ... (5)

6OH⁻ → 3/2O₂ + 3H₂O + 6e⁻ ... (6)

N₂ + 6H₂O + 6e⁻ → 2NH₃ + 6OH⁻ ... (7)

N₂ + 6H⁺ + 6e⁻ → 2NH₃ ... (8)

Humidifying the cathode gas with the humidifier 302 can prevent cations in the anode solution from reacting with the substance to be reduced to precipitate cationic carbonates in the cathode flow path 122. Further, water is supplied from the inlet of the cathode flow path 122 to dissolve the precipitated salt in some cases.

In the case where a porous membrane is used for the separator 131, when the pressure loss by the cathode flow path 122 is large due to salt precipitation, the amount of water moved from the cathode flow path 122 to the anode flow path 112 also increases. Further, when the pressure loss of the membrane decreases due to deterioration of the porous membrane, the amount of water moved from the cathode flow path 122 to the anode flow path 112 increases.

The anode fluid discharged from the anode flow path 112 is supplied to the anode collector 201 through the anode discharge flow path P2. Part of the anode solution supplied to the anode flow path 112 is supplied to the cathode flow path 122 via the anode 111, the separator 131, and the cathode 121 in some cases. In contrast to this, the cathode fluid discharged from the cathode flow path 122 is fed to the cathode collector 401 through the cathode discharge flow path P4, where the cathode exhaust gas containing the reduction product is separated from the cathode fluid and collected by the cathode collector 401.

When the cations in the anode solution move to the cathode flow path 122 with the electrolytic reaction, the amount of cations in the entire reaction system including the anode flow path 112 decreases along with the reaction, and the concentration of the electrolytic solution in the anode discharge liquid decreases. When the concentration of the electrolytic solution decreases, the cell resistance increases, and the efficiency of the electrolytic reaction also decreases due to the decrease in the amount of ions moved.

Water moves from the cathode flow path 122 to the anode flow path 112 with the electrolytic reaction in some cases. This is particularly noticeable when the cathode gas is humidified and supplied to the electrolytic part 100 in order to prevent precipitation of salt in the cathode flow path 122 or when water is supplied to the cathode flow path 122. When water moves, the amount of water in the anode solution increases, and thus, the concentration of the electrolytic solution further decreases and the efficiency of the electrolytic reaction decreases.

When the operation of the electrolytic device 1 is continued for a long period of time, the temperature of the anode solution increases and the temperature of the electrolysis cell increases. In contrast to this, cooling the electrolysis cell by directly cooling the anode solution or supplying the cooled anode solution to the cooling flow path 141 is cited.

In the case of cooling the electrolysis cell by the cooled anode solution, when the anode solution is cooled in the middle of the anode discharge flow path P2, the anode fluid containing the anode solution that is discharged from the anode flow path 112 and warmed by the electrolytic reaction is cooled to move to the anode collector 201. The anode collector 201 separates the anode fluid into an anode exhaust gas containing oxidation products produced by the electrolytic reaction and an anode discharge liquid containing the anode solution. Furthermore, when the anode exhaust gas is cooled by the anode collector 201 to condense the water vapor contained in the anode exhaust gas to produce anode condensed water, the amount of water discharged as water vapor decreases, and thereby the concentration of the electrolytic solution further decreases, causing a decrease in electrolysis efficiency.

On the other hand, if the warmed anode fluid, the anode fluid being configured to be discharged from the anode flow path 112, is supplied directly to the anode collector 201 without being cooled, the temperature of the anode discharge liquid accommodated in the tank of the anode collector 201 increases. This causes the temperature of the electrolysis cell to increase.

The anode solution may be cooled between the electrolysis cell and the anode collector 201, for example. In this case, the amount of water vapor to be discharged increases, but when the temperature of the electrolysis cell is about 70°C and the temperature of the anode solution is about 50°C to 60°C, with the amount of water vapor in the anode exhaust gas, the concentration of the electrolytic solution decreases and the cell performance decreases even when the amount of the anode solution decreases. Therefore, in the case where the temperature of the electrolysis cell is increased and the operation of the electrolytic device 1 is continued, even if the concentration of the electrolytic solution can be maintained, the amount of the electrolytic solution gradually decreases, making it difficult to continue the reaction.

Since the cooled anode discharge liquid is reheated in the electrolytic part 100, the energy loss is large, which is not preferable. In the case of cooling in the middle of the anode discharge flow path P2, cooling efficiency is very poor because a large amount of the anode solution in the tank of the anode collector 201 has to be cooled by a small amount of the cooled anode fluid and high ambient temperatures are expected due to the equipment in the device.

In order to prevent the concentration of the electrolytic solution in the anode solution from decreasing, returning the cathode discharge liquid accommodated in the cathode collector 401 to the tank in the anode collector 201 is cited. However, it is difficult to stabilize the cell output because the amount of electrolytic solution varies. For this reason, providing a mechanism to supply water and an electrolytic solution component to the anode collector 201 is cited, but in this case, water and an electrolytic solution component are required separately, the number of equipment increases, and the equipment cost and the operating cost both increase, which is not preferable.

Further, as described above, it is necessary to supply water to the humidifier 302 in order to humidify the cathode gas. Therefore, it is conceivable to supply the water contained in the anode discharge liquid from the anode collector 201 to the humidifier 302. However, at normal cooling temperatures (about 5°C to 25°C), the amount of electrolytic solution decreases, so that the water that can be supplied to the humidifier 302 runs short. Another problem also arises by directly supplying the anode discharge liquid to the humidifier 302 and the cathode flow path 122. Since only the water evaporates in the humidifier 302, the electrolytic solution component in the humidifier 302 is concentrated, causing salt precipitation. In addition, energy efficiency deteriorates because the cooled anode discharge liquid needs to be reheated in order to return it to the humidifier 302.

Therefore, in the electrolytic device in this arrangement, after separating the anode exhaust gas from the anode fluid, the anode exhaust gas separated by the anode collector 201 is cooled using the cooler 501 provided separately from the anode collector 201, to thereby condense the water vapor contained in the anode exhaust gas to produce anode condensed water. The produced anode condensed water is distilled water and thus can be supplied to the humidifier 302. By employing the above configuration, it is possible to inhibit the decrease in the water from the reaction system, and the device can be operated for a long period of time without the need to resupply water or an electrolytic solution from the outside.

Furthermore, the electrolytic device in this arrangement forms a heat exchange structure that exchanges heat between the anode discharge liquid flowing through the circulation flow path P7 and the anode condensed water flowing through the circulation flow path P8. The anode condensed water supplied to the humidifier 302 is warmed by the anode discharge liquid, and the anode discharge liquid is cooled by the anode condensed water and supplied to the anode flow path 112 as the anode solution, and thus, the anode solution and the electrolysis cell can be cooled and the anode condensed water can be heated to be supplied to the humidifier 302. Therefore, it is possible to achieve a high energy efficient configuration.

The heat exchange structure preferably includes the heat exchanger 601. It is not necessary to include the heat exchanger 601 due to the cost or the size of the device, and pipes of the both may be connected with a heat exchange member due to the limitation of the cost or the size of the device. When considering heat exchange properties, the heat exchange member is preferably a metal member such as gold, silver, or copper, but from the viewpoint of cost or corrosiveness, metal members other than the above may be used.

As described above, in order to prevent the salt precipitation in the cathode flow path 122, the cathode gas containing the substance to be reduced is humidified from the cathode supply flow path P3. Then, in order to prevent condensation of water inside the electrolytic part 100, it is preferable to always supply water to the humidifier 302 in order to feed saturated steam having a temperature that is 0°C or more and about 20°C or less compared to the cell temperature. In contrast to this, by exchanging heat between the anode condensed water and the anode discharge liquid to warm the anode condensed water, the amount of heat energy input from the heater to the humidifier 302 is reduced rather than supplying normal water to the humidifier 302, resulting in that it is possible to improve the energy efficiency of the entire system. Further, even when water moves from the cathode flow path 122 to the anode flow path 112, the water that has moved to the anode flow path 112 returns to the humidifier 302, thereby making it possible to inhibit the decrease in water in the entire device system.

It is also possible that the anode condensed water is cooled to cool the anode exhaust gas and the cathode exhaust gas, the water vapor contained in these exhaust gases is condensed to produce cathode condensed water, and the cathode condensed water directly cools the electrolysis cell and then is returned to the condensed water collector 502. At this time, the cathode condensed water may be supplied to the humidifier 302 through the circulation flow path P8 to resupply the humidifying water. This is preferable because it is possible to supply only the required amount of condensed water according to the transition of the humidifying water. It is also excellent as an adjustment of cooling performed by the amount of condensed water circulating, which is suitable because it is easy to adjust the liquid volume by circulating the condensed water and the cooling capacity can be adjusted according to the amount of generated heat of the electrolysis cell, or the amount and temperature of water vapor in the anode exhaust gas and the cathode exhaust gas. Further, the cooling of the anode exhaust gas, the cooling of the cathode exhaust gas, and the cooling of the electrolysis cell do not necessarily have to be performed in this order, and some or all cooling operations may be performed in parallel.

As the discharge of water from the reaction system due to the electrolytic reaction, only the water vapor contained in the cathode exhaust gas containing reduction products such as carbon monoxide and the water vapor contained in the anode exhaust gas containing oxidation products such as oxygen are discharged. When the cooling temperature is reduced extremely in order to prevent water from decreasing from the reaction system, a lot of energy is consumed, and thus, it is preferable to remove the water vapor in the anode exhaust gas containing oxidation products at a temperature of about room temperature of 25°C to about 40°C. On the other hand, the same is true for the cathode exhaust gas, but when it is preferable that no water vapor is involved in the reaction for further conversion of the reduction product to another compound such as methanol, it is preferable to remove the water vapor as much as possible. In either case, water decreases from the reaction system. Therefore, such a mechanism to supply water as the water supply source 303 may be provided in one of the flow paths in the reaction system. Further, regarding the electrolytic solution component, because of the influences of discharge due to the relationship between the water levels of the tank of the anode collector 201 and the tank of the cathode collector 401, discharge of the solid fine powder of the electrolytic solution component that has become a carbonate from the reaction system, and so on, in order to adjust the concentration of the electrolytic solution, such a mechanism to supply the electrolytic solution component as the electrolytic solution supply source 212 may be provided in one of the flow paths for circulating the electrolytic solution.

The control device 701 may receive and analyze detection signals from sensors of the detector 211, which measures the amount and concentration of the anode solution, the detector 311, which measures the water level of hot water accommodated in the tank of the humidifier 302, the detector 151, which measures the cell output and cell temperature, and the like. The control device 701 transmits control signals based on the analysis results to, for example, the flow rate controller 202, the valve 402, and the flow rate controller 602, and thereby, the flow rate of the anode solution can be adjusted by the flow rate controller 202, the flow rate of the cathode discharge liquid returned to the anode collector 201 can be adjusted by the valve 402, and the flow rates of the anode condensed water and the cathode condensed water supplied to the humidifier 302 can be adjusted by the flow rate controller 602. Further, the control device 701 may adjust the amount of water supplied from the water supply source 303 by controlling a valve provided in the middle of the flow path connecting the water supply source 303 and the humidifier 302 with a control signal based on each detection signal. By the control device 701, objectives such as improvement in cell output, low-cost operation, and long-life operation can be set freely to operate the electrolytic device 1. In addition, the degree of freedom in adjusting the concentration and amount of the electrolytic solution is improved, enabling stable operation for a long period of time.

The control device 701 may perform a cooling operation when the cell output of the electrolysis cell during electrolysis does not meet the required criteria. The required criteria for the cell output are set, for example, based on the relationship between the cell output and the temperature of the electrolysis cell. As the temperature of the electrolysis cell increases, the cell output tends to decrease.

The need for the above-described cooling operation can be determined not only by the variations in the cell voltage, cell current, and cell temperature of the electrolysis cell, but also by the performance of the gas/liquid separation between the anode 111 and the cathode 121, that is, by using the amounts of liquid and gas moved between the anode 111 and the cathode 121, the amount of product gas, the difference in potential between the cell voltage and the reference electrode, and the estimated value of Faradaic efficiency based on these parameters. Further, a comprehensive determination can be made from the respective parameters, and the combination of each value and the calculation method are arbitrary.

When the current density of the electrolysis cell is low and the electrolysis efficiency is high, the amount of heat generated is small, and the in-plane uniformity of the temperature of the electrolysis cell can be maintained by supplying the cathode condensed water to the cooling flow path 141. On the other hand, when the current density of the electrolysis cell is high and the electrolysis efficiency is low, the amount of heat generated is large, and it is necessary to maintain the in-plane uniformity of the temperature of the electrolysis cell by circulating the cathode condensed water supplied to the cooling flow path 141. Therefore, it is simple and preferable to determine the need for the cooling operation according to the current density and the electrolysis efficiency of the electrolysis cell.

The need for the cooling operation may be determined by considering the operating time of the electrolysis cell. The operating time can be calculated by estimating or predicting the rate of temperature rise based on the amount of heat dissipation of the electrolysis cell and the amount of heat dissipation associated with the temperature rise of the anode solution. Therefore, it is preferable to control the temperature of the anode solution according to the prediction of future electrolysis cell operation. It is also possible to use calculated values such as an integrated voltage value and time and a product of a current value and time, and the combination of the values and calculation methods of the values are arbitrary. Further, the determination based on these combined calculated values is preferable because the difference due to the method of operating the electrolysis cell is taken into account rather than the determination based solely on the duration. Furthermore, the varied value of the current or voltage, the pH value of the anode solution, the change value, the oxygen generation amount, and the varied amount may be used to determine the need for the cooling operation.

The anode solution preferably has an electric conductivity of at least 10 mS/m or more and more preferably has an electric conductivity of 100 mS/m or more. As a result, the effect of reducing the internal resistance of the electrolysis cell and the effect of increasing the thermal conductivity can be achieved. Considering the cooling performance, it is preferable to use an electrolytic solution having a thermal conductivity higher than that of water as the anode solution. With the high thermal conductivity, the heat of the electrolysis cell can be efficiently transferred to the electrolytic solution to cool the electrolysis cell. Cooling is important because the reduction reaction of the substance to be reduced has low electrolysis efficiency and generates a large amount of heat. The electrolysis efficiency is defined here as theoretical voltage/reaction voltage.

The anode solution contains ions, and thereby, the freezing point of the anode solution can be 0°C or less. As a result, the anode solution does not freeze even in an environment of 0°C or less, and thus, the use in cold regions, for example, is facilitated. In addition, freezing of the inside of the electrolysis cell causes physical destruction of cell members and other problems. For example, the inside of the anode flow path 112 or the cooling flow path 141 freezes and expands in volume, which may break screws or the like that hold the clamping plate. Further, the tightening pressure greatly affects the performance of the electrolysis cell, and thus, one-time expansion may cause the tightening pressure to vary. This may cause clamping plate distortion, screw distortion, flow path plate distortion, or the like. Furthermore, the performance may decrease by destruction of the separator 131 caused by swelling, expansion and contraction, or the like, a decrease in the ion exchange performance of the electrolyte, cracking of the gas diffusion layer or the cathode catalyst layer due to freezing, or other reasons.

All unused energy from the electrolysis operation is exhausted to the outside as heat. In a stack containing a plurality of electrolysis cells, in particular, the reaction volume density is high, making cooling even more important. Further, the electrolytic reaction of the substance to be reduced greatly changes in reaction characteristics depending on the temperature, and thus, when the in-plane uniformity of the temperature of the electrolysis cell or the temperature distribution of the electrolysis cell in a stack containing a plurality of electrolysis cells is large, the electrolysis efficiency greatly decreases, resulting in that the cooling performance and the uniform temperature distribution through the cooling method are effective in improving the efficiency.

Similarly, there is a method to keep the cell temperature uniform by varying the flow rate of the anode solution. However, when the flow rate of the anode solution varies, the cell output varies, and when gas components such as an oxygen gas generated by the reaction in the anode solution exist in the flow path, a gas-liquid two-layer flow is formed and pressure loss occurs. It is difficult to perform control in the flow paths with different flow path structures and pressure losses and further the change in reaction characteristics caused by the difference in flow rate is large, and thus, the above-described method is not preferable.

### (Second arrangement)

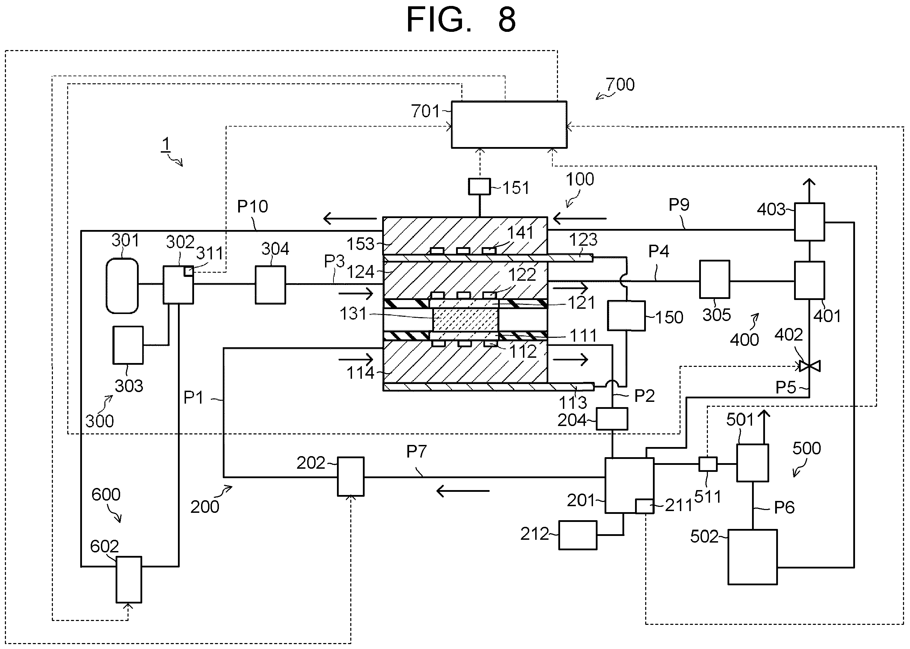

FIG. 8 is a schematic view for explaining a configuration example of an electrolytic device in a second arrangement. An electrolytic device 1 includes, similarly to the first arrangement, the electrolytic part 100, the anode supply part 200, the cathode supply part 300, the cathode discharge part 400, the cooling part 500, the circulation part 600, and the control part 700. In the following, parts different from the first arrangement will be explained, and the explanation of the electrolytic device 1 in the first arrangement can be used as appropriate for the other parts.

The electrolytic device 1 illustrated in FIG. 8 differs from the electrolytic device 1 illustrated in FIG. 1 in that it further includes a cooler 403 in the cathode discharge part 400 and does not include the heat exchanger 601 or the circulation flow path P8 in the circulation part 600.

The cooler 403 is connected to the cathode collector 401. The cooler 403 cools the cathode exhaust gas separated by the cathode collector 401, to thereby condense the water vapor contained in the cathode exhaust gas to produce water (cathode condensed water). Carbon products and unreacted substances to be reduced contained in the cathode exhaust gas are collected as gases.

The cooler 403 is connected to the inlet of the cooling flow path 141 via the supply flow path P9. The cathode condensed water is supplied as cooling water to the cooling flow path 141 through the supply flow path P9. The supply flow path P9 is formed of a pipe, for example. As illustrated in FIG. 2 and FIG. 3, when the cooling flow path 142 and the cooling flow path 143 are provided, the same cooling water as that in the cooling flow path 141 may be supplied to the cooling flow path 142 and the cooling flow path 143 connected to the supply flow path P9.

The cooling flow path 141 forms a heat exchange structure that exchanges heat between the cathode condensed water flowing through the cooling flow path 141 and the anode solution flowing through the anode flow path 112 together with the electrolysis cell. Thereby, the anode solution can be cooled, and at the same time, the cathode condensed water flowing through the cooling flow path 141 can be heated. The heat exchange structure can be formed by connecting the cooling flow path 141, the anode flow path 112, and the cathode flow path 122 via the flow path plate 114 and the flow path plate 124 functioning as heat exchange members, for example.

The heat-exchanged cathode condensed water discharged from the outlet of the cooling flow path 141 flows through the discharge flow path P10 that connects the cooling flow path 141 and the humidifier 302. This allows the cathode condensed water flowing through the discharge flow path P10 to be supplied to the humidifier 302. The discharge flow path P10 is formed of a pipe, for example. The flow rate controller 602 can control the flow rate of the cathode condensed water supplied to the humidifier 302. The flow rate controller 602 does not necessarily have to be provided.

As illustrated in FIG. 8, the cooler 403 may be provided in the middle of the supply flow path P9 connecting the inlet of the cooling flow path 141 and the condensed water collector 502 and the anode condensed water may be supplied to the cooling flow path 141 together with the cathode condensed water. This arrangement is not limited to this, and the supply flow path P9 does not have to be connected to the condensed water collector 502.

The electrolytic device in the second arrangement condenses the water vapor in the cathode exhaust gas containing a substance to be reduced, a reduction product, and gas such as a hydrogen gas by a side reaction with the cooler 403 to produce cathode condensed water. The cathode discharge liquid contains an electrolytic solution component of the anode solution that has moved from the anode flow path 112 to the cathode flow path 122. The cathode condensed water is returned to the humidifier 302 and the cathode discharge liquid is returned to the anode collector 201. This inhibits water from decreasing from the entire reaction system, and the humidifier 302 and the anode collector 201 only need to be replenished with water equivalent to the amount of saturated water vapor at the cooled temperature, and the concentration of the electrolytic solution can be kept constant.

The cathode fluid is separated into a cathode exhaust gas and a cathode discharge liquid by the cathode collector 401. The cathode exhaust gas is then cooled to produce cathode condensed water. The cathode discharge liquid is returned to the anode collector 201. The cathode condensed water does not contain the electrolytic solution component, and when returned to the humidifier 302, the electrolytic solution component does not enter the humidifier 302, thus inhibiting corrosion of the humidifier 302. Further, the concentration of the electrolytic solution can be stabilized because the electrolytic solution component moving to the cathode flow path 122 is returned to the anode flow path 112. The humidifier 302 is operated at a temperature of about 0°C to 20°C lower than that of the electrolysis cell. On the other hand, the temperature of the cathode exhaust gas is also about 0°C to 20°C lower than that of the cell temperature. Although the gas component changes due to the electrolytic reaction, the approximate amount of gas does not vary significantly, and the amount of water vapor discharged and the amount of water evaporated in the humidifier 302 are almost the same when the cathode fluid is directly separated into gas and liquid as in this arrangement. Since the amount of the cathode condensed water produced by cooling the cathode exhaust gas and the amount of water reduced in the humidifier 302 are almost the same, the variation in the amount of the electrolytic solution component can be prevented and the stability of the concentration of the electrolytic solution can be maintained.

As in the first arrangement, the control device 701 transmits control signals based on the analysis results of the detection signals to, for example, the flow rate controller 202, the valve 402, and the flow rate controller 602, and thereby, the flow rate of the anode solution can be adjusted by the flow rate controller 202, the flow rate of the cathode discharge liquid returned to the anode collector 201 can be adjusted by the valve 402, and the flow rates of the anode condensed water and the cathode condensed water supplied to the humidifier 302 can be adjusted by the flow rate controller 602. By the control device 701, objectives such as improvement in cell output, low-cost operation, and long-life operation can be set freely to operate the electrolytic device 1. In addition, the degree of freedom in adjusting the concentration and amount of the electrolytic solution is improved, enabling stable operation for a long period of time.

As described above, the electrolytic device in the second arrangement can cool the electrolysis cell by providing the cooling flow path 141 for cooling the electrolysis cell and supplying the cathode condensed water to the cooling flow path 141. In this case, the temperature of the anode solution is lower than that of the electrolysis cell. In the anode collector 201, oxidation products such as oxygen are separated as the anode exhaust gas, and water equivalent to the amount of saturated water vapor of the hot anode solution is discharged. Such a configuration may reduce the amount of electrolytic solution and require the addition of large amounts of water to the anode solution.

When the electrolysis cell is cooled by the anode solution, a cooler is provided before the anode collector 201, for example, and thereby, the amount of water discharged can be reduced. On the other hand, when a cooler is provided after the anode collector 201, the amount of water vapor discharged increases and the amount of the electrolytic solution greatly decreases.

As described above, the electrolytic solution component moves from the anode flow path 112 to the cathode flow path 122, and the amount of movement increases with the electrolytic reaction. Therefore, with the electrolytic reaction, the concentration of the electrolytic solution decreases and the cell resistance increases, resulting in that the reaction efficiency decreases gradually. In order to optimize the concentration of the electrolytic solution, it is preferable to perform the operation while always stabilizing the amount of the electrolytic solution. However, when another cooling mechanism is provided for the position of the cooler or for cooling the cell, the operation is extremely unstable due to the temperature of the electrolytic solution or the amount of cooling heat depending on the operating conditions of the cell.

In contrast to this, the electrolytic device in the second arrangement supplies the cathode condensed water to the cooling flow path 141 to cool the electrolysis cell, thereby making it possible to reduce the amount of decrease in the water in the entire reaction system, resulting in that it is possible to stably maintain the amount of the electrolytic solution. Further, the electrolytic device in the second arrangement can simultaneously cool the electrolysis cell and warm the condensed water by exchanging heat between the cathode condensed water and the anode solution and returning the heat-exchanged cathode condensed water to the humidifier 302, as in the first arrangement, resulting in that the energy for cooling the cell and the energy applied to the humidifier 302 decrease, to enable an improvement in the system efficiency.

This arrangement can be appropriately combined with another arrangement.

### (Third arrangement)

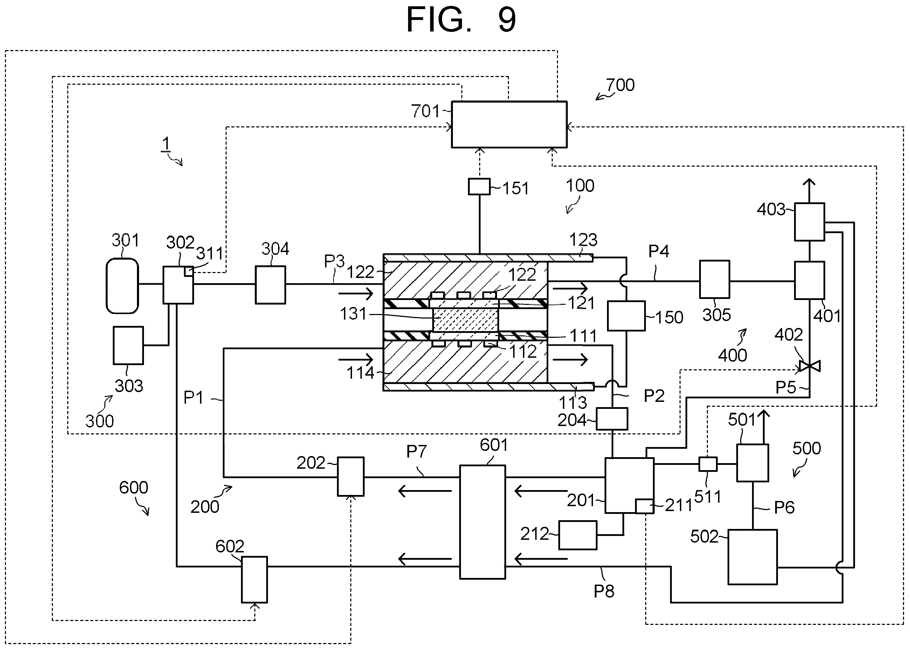

FIG. 9 is a schematic view for explaining a configuration example of an electrolytic device 1 according to a third arrangement. The electrolytic device 1 includes, similarly to the first arrangement, the electrolytic part 100, the anode supply part 200, the cathode supply part 300, the cathode discharge part 400, the cooling part 500, the circulation part 600, and the control part 700. In the following, parts different from the first arrangement will be explained, and the explanation of the electrolytic device 1 in the first arrangement can be used as appropriate for the other parts.

The electrolytic device 1 illustrated in FIG. 9 differs from the electrolytic device 1 illustrated in FIG. 1 in that it further includes the cooler 403 in the cathode discharge part 400 and does not include the cooling flow path 141 in the electrolytic part.

The cooler 403 cools the cathode exhaust gas separated by cathode collector 401, to thereby condense the water vapor contained in the cathode exhaust gas to produce cathode condensed water.

The cooler 403 is provided in the middle of the circulation flow path P8. The cathode exhaust gas is cooled using the anode condensed water. The cathode condensed water is supplied to the humidifier 302 together with the anode condensed water through the circulation flow path P8 and the heat exchanger 601 as in the first arrangement.

As described above, the electrolytic device in the third arrangement condenses the water vapor in the cathode exhaust gas with the cooler 403 to produce cathode condensed water. The cathode discharge liquid contains the electrolytic solution component that has moved from the anode flow path 112 to the cathode flow path 122. The cathode condensed water is returned to the humidifier 302 through the circulation flow path P8 and the cathode discharge liquid is returned to the anode collector 201. This inhibits water from decreasing from the entire reaction system, and the humidifier 302 and the anode collector 201 only need to be replenished with water equivalent to the amount of saturated water vapor at the temperature of the cooled anode solution, and the concentration of the electrolytic solution can be kept constant.

Furthermore, the electrolytic device in the third arrangement uses the anode condensed water for cooling the cathode exhaust gas before exchanging heat with the anode discharge liquid in the heat exchanger 601 as in the first arrangement. This increases the temperature of the anode condensed water returned to the humidifier 302, and thus the third arrangement is more preferable. The order of heat exchange at this time may be either the cathode exhaust gas or the anode discharge liquid. For cooling the cell, it is preferable to perform heat exchange with the anode discharge liquid first, but when it is desired to preferentially cool the cathode exhaust gas, it is preferable to perform heat exchange with the cathode exhaust gas first. The preferred order of these heat exchanges is not particularly limited because it varies depending on the operating temperature of the electrolysis cell, the amount of discharged energy, or the priority of cooling of the cathode exhaust gas.

This arrangement can be appropriately combined with another arrangement.

### (Fourth arrangement)

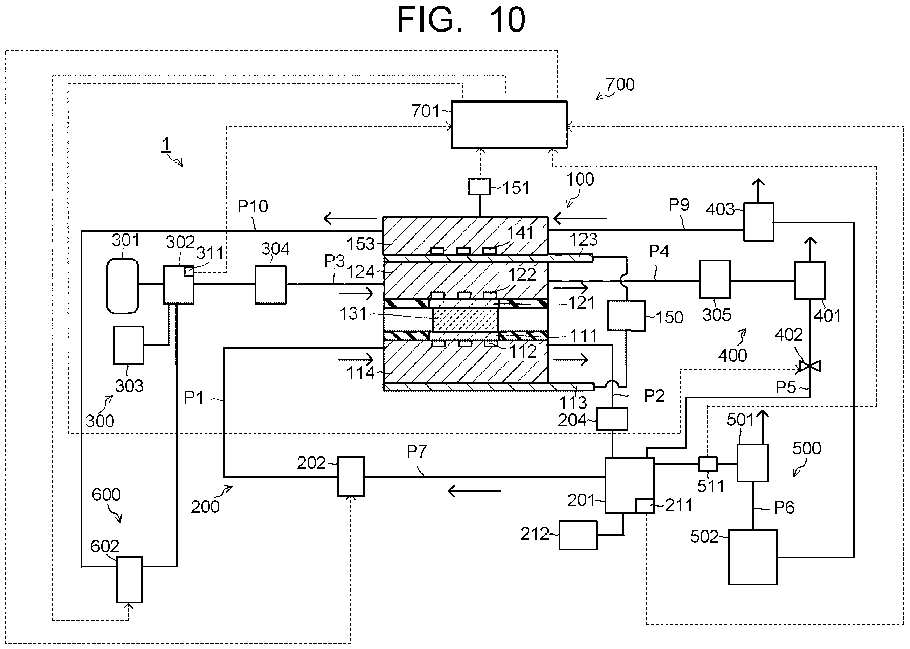

FIG. 10 is a schematic view for explaining a configuration example of an electrolytic device 1 according to a fourth arrangement. The electrolytic device 1 includes, similarly to the second arrangement, the electrolytic part 100, the anode supply part 200, the cathode supply part 300, the cathode discharge part 400, the cooling part 500, the circulation part 600, and the control part 700. In the following, parts different from the second arrangement will be explained, and the explanation of the electrolytic device in the second arrangement can be used as appropriate for the other parts.

The electrolytic device illustrated in FIG. 10 differs from the electrolytic device illustrated in FIG. 8 in that the cooler 403 is not directly connected to the cathode collector 401.

The cathode collector 401 separates the cathode discharge liquid discharged from the cathode flow path 122 into a cathode discharge liquid and a cathode exhaust gas. The cathode discharge liquid is returned to the anode collector 201 through the circulation flow path P5. The cathode exhaust gas may be collected externally as gas.

The cooler 403 is provided in the middle of the supply flow path P9. The cooler 403 cools the anode condensed water supplied from the condensed water collector 502. The cooled anode condensed water is supplied as cooling water to the cooling flow path 141 through the supply flow path P9.

As in the second arrangement, the cooling flow path 141, together with the electrolysis cell, forms a heat exchange structure that exchanges heat between the anode condensed water flowing through the cooling flow path 141 and the anode solution flowing through the anode flow path 112. This makes it possible to cool the anode solution and at the same time, heat the anode condensed water flowing through the cooling flow path 141. The heat exchange structure can be formed by connecting the cooling flow path 141 and the anode flow path 112 via the flow path plate 114 and the flow path plate 124 functioning as heat exchange members, for example.

The heat-exchanged anode condensed water discharged from the outlet of the cooling flow path 141 flows through the discharge flow path P10 connecting the cooling flow path 141 and the humidifier 302. As a result, the anode condensed water flowing through the discharge flow path P10 is supplied to the humidifier 302. The flow rate controller 602 can control the flow rate of the anode condensed water supplied to the humidifier 302.

The electrolytic device in the fourth arrangement cools the anode condensed water and supplies the cooled anode condensed water to the cooling flow path 141 as cooling water. This allows direct cooling of the electrolysis cell rather than cooling the anode solution, and thus, the electrolytic device can be designed and operated only from the viewpoint of cooling performance of the electrolysis cell, without the influence of the temperature distribution inside the electrolysis cell, the change in flow rate of the anode solution, or the like. In addition, the electrolysis cell can be cooled regardless of the temperature change or the heat generation amount change associated with the electrolysis operation. In addition, the cooling flow path 141 can be freely designed so as to reduce the temperature distribution inside the electrolysis cell. A plurality of cooling flow paths may be provided, to vary the flow rate of cooling water of each of a plurality of the cooling flow paths so as to reduce the temperature, the amount of generated heat, or the temperature distribution of the electrolysis cell.

Further, the electrolytic device in the fourth arrangement can simultaneously cool the electrolysis cell and warm the condensed water by exchanging heat between the anode condensed water and the anode solution and returning the heat-exchanged anode condensed water to the humidifier 302, as in the second arrangement, resulting in that the energy for cooling the cell and the energy applied to the humidifier 302 decrease, to enable an improvement in the system efficiency.

This arrangement can be appropriately combined with another arrangement.

### (Fifth arrangement)

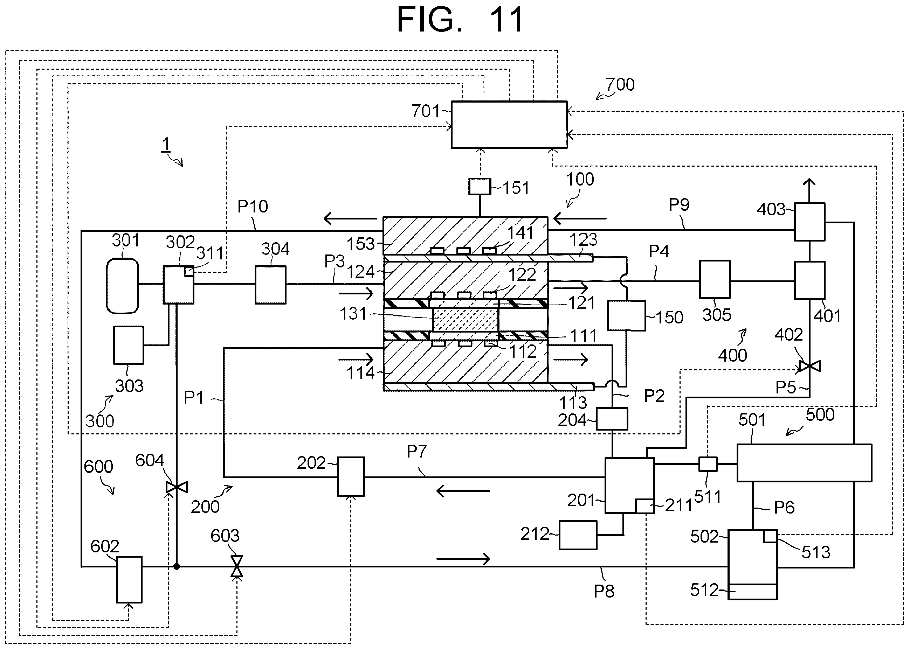

FIG. 11 is a schematic view for explaining a configuration example of an electrolytic device according to a fifth arrangement. The electrolytic device 1 includes, similarly to the second arrangement, the electrolytic part 100, the anode supply part 200, the cathode supply part 300, the cathode discharge part 400, the cooling part 500, the circulation part 600, and the control part 700. In the following, parts different from the second arrangement will be explained, and the explanation of the electrolytic device in the second arrangement can be used as appropriate for the other parts.

The electrolytic device illustrated in FIG. 11 differs from the electrolytic device illustrated in FIG. 8 in that it further includes a valve 603 and a valve 604 in the circulation part 600 and includes the circulation flow path P8.

The condensed water collector 502 includes a cooler 512 that cools the anode condensed water accommodated in the tank, and at least one detector 513 that detects the water level of the anode condensed water accommodated in the condensed water collector 502 from the bottom of the tank and the temperature of the condensed water collector 502.

The cooler 501 can cool the anode exhaust gas using the cooled anode condensed water. The cooler 501 includes double pipes, for example, with the anode exhaust gas flowing through one pipe and the cooled anode condensed water flowing through the other pipe. The anode condensed water used for cooling the anode exhaust gas is supplied to the cooler 403 through the cooler 501 to be cooled.

As illustrated in FIG. 11, the cooler 403 may be provided in the middle of the supply flow path P9 connecting the inlet of the cooling flow path 141 and the condensed water collector 502 to supply the cooled anode condensed water to the cooling flow path 141 together with the cathode condensed water. This arrangement is not limited to this, and the supply flow path P9 does not have to be connected to the condensed water collector 502.

The heat-exchanged mixed water of the anode condensed water and the cathode condensed water discharged from the outlet of the cooling flow path 141 flows through the discharge flow path P10 that connects the outlet of the cooling flow path 141 to the humidifier 302. The discharge flow path P10 is connected to the circulation flow path P8. The explanation of the first arrangement can be used as appropriate for the explanation of the circulation flow path P8.

The valve 603 is provided in the middle of the circulation flow path P8 connecting the discharge flow path P10 and the condensed water collector 502. The valve 604 is provided after the connection point between the circulation flow path P8 and the discharge flow path P10 in the middle of the discharge flow path P10. By opening the valve 603 and closing the valve 604, the mixed water of the anode condensed water and the cathode condensed water flowing through the discharge flow path P10 can be supplied to the condensed water collector 502 to be returned. By closing the valve 603 and opening the valve 604, the mixed water of the anode condensed water and the cathode condensed water can be supplied from the condensed water collector 502 to the humidifier 302. The flow rate controller 602 is provided in the middle of the discharge flow path P10. The flow rate controller 602 can control the flow rate of the mixed water of the anode condensed water and the cathode condensed water supplied to the humidifier 302.

The electrolytic device in the fifth arrangement condenses the water vapor in the cathode exhaust gas with the cooler 403 to produce cathode condensed water. The cathode discharge liquid contains the electrolytic solution component that has moved from the anode flow path 112 to the cathode flow path 122. The cathode condensed water is returned to the humidifier 302 and the cathode discharge liquid is returned to the anode collector 201. This inhibits water from decreasing from the entire reaction system, and the humidifier 302 and the anode collector 201 only need to be replenished with water equivalent to the amount of saturated water vapor at the cooled temperature, and the concentration of the electrolytic solution can be kept constant.

As in the first arrangement, the control device 701 transmits control signals based on the analysis results of the detection signals to, for example, the flow rate controller 202, the valve 402, the flow rate controller 602, the valve 603, and the valve 604, and thereby, the flow rate of the anode solution can be adjusted by the flow rate controller 202, the flow rate of the cathode discharge liquid returned to the anode collector 201 can be adjusted by the valve 402, and the selection of a supply destination of the anode condensed water and the cathode condensed water or the flow rates thereof can be adjusted by the flow rate controller 602, the valve 603, and the valve 604. By the control device 701, objectives such as improvement in cell output, low-cost operation, and long-life operation can be set freely to operate the electrolytic device 1. In addition, the degree of freedom in adjusting the concentration and amount of the electrolytic solution is improved, enabling stable operation for a long period of time.

As described above, the electrolytic device in the fifth arrangement uses the anode condensed water for cooling the anode exhaust gas, and also uses it as cooling water for cooling the cathode exhaust gas and the electrolysis cell, to return at least part of the anode condensed water to the humidifier 302 and return at least part of the anode condensed water to the condensed water collector 502. Further, by selecting the supply destination of the anode condensed water by the control device 701 using the detection signals of the detector 311 and the detector 513, the electrolysis cell can be cooled even if the amount of the anode condensed water contained in the anode exhaust gas is small, for example. Further, by adjusting the flow rate of the anode condensed water using the detection signal, it is possible to adjust the cooling efficiency of the electrolysis cell and adjust the temperature of the electrolysis cell. Further, by varying the flow rate of the anode condensed water using the detection signal, the temperature distribution inside the electrolysis cell can be reduced.

This arrangement can be appropriately combined with another arrangement.

### (Sixth arrangement)

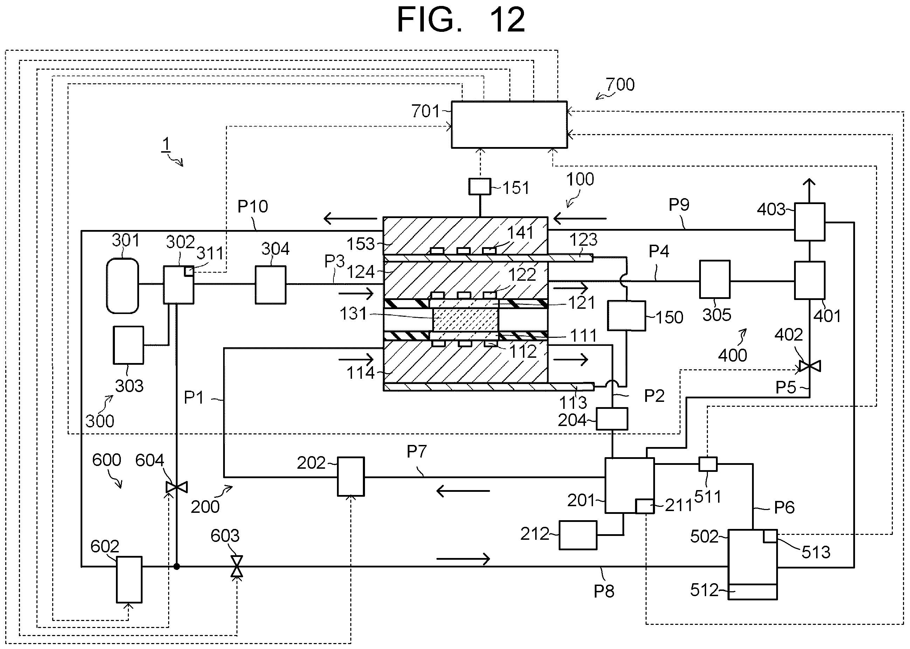

FIG. 12 is a schematic view for explaining a configuration example of an electrolytic device according to a sixth arrangement. An electrolytic device 1 includes, similarly to the second arrangement, the electrolytic part 100, the anode supply part 200, the cathode supply part 300, the cathode discharge part 400, the cooling part 500, the circulation part 600, and the control part 700. In the following, parts different from the second arrangement will be explained, and the explanation of the electrolytic device in the second arrangement can be used as appropriate for the other parts.

The electrolytic device illustrated in FIG. 12 differs from the electrolytic device illustrated in FIG. 8 in that it further includes the valve 603 and the valve 604 in the circulation part 600 and includes the circulation flow path P8. Further, the electrolytic device illustrated in FIG. 12 differs from the electrolytic device illustrated in FIG. 8 in that it does not include the cooler 501 in the cooling part 500. The valve 603 and the valve 604 are the same as those in the fifth arrangement, and thus, the explanation of the valves in the fifth arrangement can be used as appropriate for them. The explanation in the first arrangement can be used as appropriate for the explanation of the circulation flow path P8.

The condensed water collector 502 includes the cooler 512 that cools the anode exhaust gas supplied from the anode collector 201 to thereby condense the water vapor contained in the anode exhaust gas to produce anode condensed water, and at least one detector 513 that detects the water level of the anode condensed water accommodated in the condensed water collector 502 from the bottom of the condensed water collector 502, the temperature of the condensed water collector 502, and the concentration of at least one ion contained in the anode exhaust gas.

The cooler 403 can cool the cathode exhaust gas using the anode condensed water to produce cathode condensed water. The cathode condensed water is supplied to the cooling flow path 141 via the cooler 403. The anode condensed water is supplied to the cooling flow path 141 together with the cathode condensed water.

As described above, the electrolytic device in the sixth arrangement directly supplies the anode exhaust gas to the condensed water collector 502 and cools it, to thereby produce the anode condensed water and cool the cathode condensed water using the anode condensed water. The anode condensed water and the cathode condensed water are supplied to the cooling flow path 141 and part of them is returned to the humidifier 302 and another part of them is returned to the condensed water collector 502 to be circulated.

By providing the cooler 403 and the cooler 512 as in the sixth arrangement, the anode exhaust gas can be directly cooled and the temperature of the cooling water can be easily controlled. Further, the temperature of the cooling water can be controlled even if the amount of anode exhaust gas or the amount of water vapor is small, and part of the cooling water can be used to cool the cathode exhaust gas and another part thereof can be used to cool the electrolysis cell, allowing the temperature of each of them to be controlled arbitrarily.

### (Seventh arrangement)

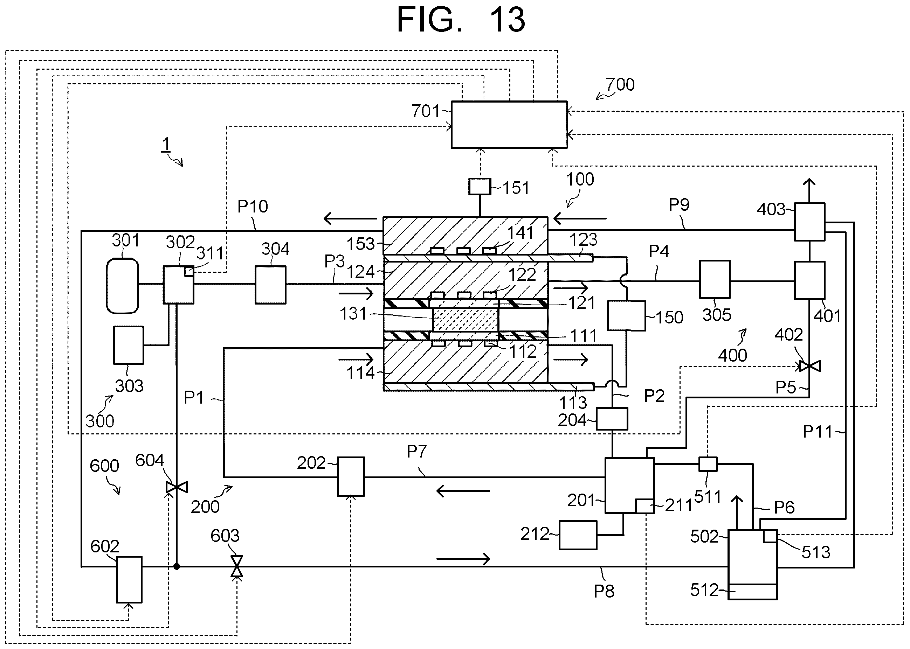

FIG. 13 is a schematic view for explaining a configuration example of an electrolytic device according to a seventh arrangement. An electrolytic device 1 includes, similarly to the sixth arrangement, the electrolytic part 100, the anode supply part 200, the cathode supply part 300, the cathode discharge part 400, the cooling part 500, the circulation part 600, and the control part 700. In the following, parts different from the sixth arrangement will be explained, and the explanation of the electrolytic device in the sixth arrangement can be used as appropriate for the other parts.

The electrolytic device illustrated in FIG. 13 differs from the electrolytic device illustrated in FIG. 12 in that it includes a supply flow path P11 that supplies the cathode condensed water produced by the cooler 403 to the condensed water collector 502.

The supply flow path P11 connects the cooler 403 and the condensed water collector 502. The cathode condensed water produced by the cooler 403 is accommodated in the condensed water collector 502 and cooled together with the anode condensed water by the cooler 403 to be supplied to the supply flow path P9. The supply flow path P11 is formed of a pipe, for example.

The cooler 403 can cool the cathode exhaust gas by using the anode condensed water and the cathode condensed water.

As described above, the electrolytic device in the seventh arrangement supplies the cathode discharge liquid to the anode collector 201, supplies the anode discharge liquid to the anode collector 201, and supplies the anode exhaust gas to the condensed water collector 502. The anode condensed water is supplied from the condensed water collector 502 to the cooler 403 together with the cathode condensed water. Other than this, the anode condensed water and the cathode condensed water are supplied as cooling water to the cooling flow path 141 in the same manner as in the sixth arrangement. The anode condensed water and the cathode condensed water are used to cool the cathode exhaust gas and cool the electrolysis cell, and part of them is supplied to the humidifier 302 and another part thereof is returned to the condensed water collector 502 to be circulated. As a result, the water discharged from the entire reaction system of the electrolytic device can be reduced and circulated, and the electrolytic device can be operated without supplying water to the electrolytic device from the outside.

This arrangement can be appropriately combined with another arrangement.

### (Eighth arrangement)

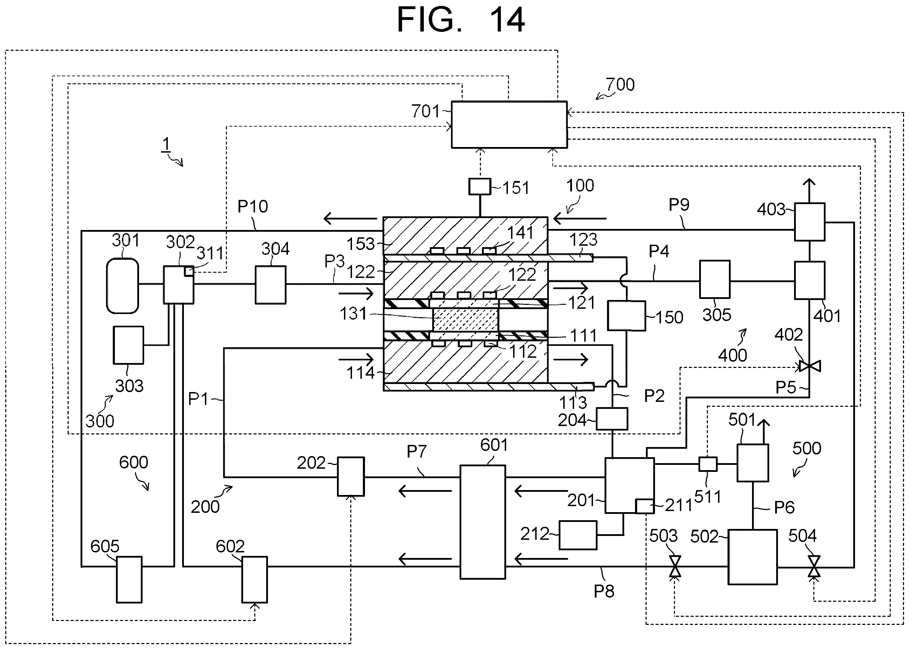

FIG. 14 is a schematic view for explaining a configuration example of an electrolytic device according to an eighth arrangement. An electrolytic device 1 includes, similarly to the first arrangement, the electrolytic part 100, the anode supply part 200, the cathode supply part 300, the cathode discharge part 400, the cooling part 500, the circulation part 600, and the control part 700. In the following, parts different from the first arrangement will be explained, and the explanation of the electrolytic device in the first arrangement can be used as appropriate for the other parts.

The electrolytic device illustrated in FIG. 14 differs from the electrolytic device 1 illustrated in FIG. 1 in that it further includes the cooler 403 in the cathode discharge part 400, a valve 503 and a valve 504 in the cooling part 500, and a flow rate controller 605 and the discharge flow path P10 in the circulation part 600. The explanation in the second arrangement can be used as appropriate for the explanations of the cooler 403 and the circulation flow path P10.

The flow rate controller 605 is provided in the middle of the discharge flow path P10. The flow rate controller 605 can control the flow rate of the anode condensed water supplied from the discharge flow path P10 to the humidifier 302. The cathode condensed water may be supplied to the humidifier 302 from the discharge flow path P10 together with the anode condensed water.

The valve 503 is provided in the middle of the circulation flow path P8 connecting the humidifier 302 and the condensed water collector 502. The valve 504 is provided before the cooler 403 in the middle of the supply flow path P9 connecting the condensed water collector 502 and the inlet of the cooling flow path 141. By opening the valve 503 and closing the valve 504, the anode condensed water and/or the cathode condensed water can be supplied to the heat exchanger 601 to exchange heat with the anode discharge liquid. By closing the valve 503 and opening the valve 504, the anode condensed water and/or the cathode condensed water can be supplied to the cooling flow path 141 to cool the electrolysis cell or the anode solution. This arrangement is not limited to this, and by opening the valve 503 and the valve 504, the anode condensed water and/or the cathode condensed water may be supplied to the heat exchanger 601 and the cooling flow path 141. Further, this arrangement is not limited to the configuration illustrated in FIG. 14, and the anode condensed water may be supplied to the heat exchanger 601 and the cathode condensed water may be supplied to the cooling flow path 141.

As in the first arrangement, the control device 701 transmits control signals based on the analysis results of the detection signals to, for example, the flow rate controller 202, the valve 402, the flow rate controller 602, the flow rate controller 605, the valve 503, and the valve 504, and thereby, the flow rate of the anode solution can be adjusted by the flow rate controller 202, the flow rate of the cathode discharge liquid returned to the anode collector 201 can be adjusted by the valve 402, and the selection of a supply destination of the anode condensed water and the cathode condensed water or the flow rates thereof can be adjusted by the valve 503, the valve 504, the flow rate controller 602, and the flow rate controller 605. By the control device 701, objectives such as improvement in cell output, low-cost operation, and long-life operation can be set freely to operate the electrolytic device 1. In addition, the degree of freedom in adjusting the concentration and amount of the electrolytic solution is improved, enabling stable operation for a long period of time.

As described above, the electrolytic device in the eighth arrangement uses the anode condensed water and/or the cathode condensed water for cooling the electrolysis cell and for cooling the anode discharge liquid to circulate them. Thereby, the water discharged from the entire reaction system of the electrolytic device can be reduced and circulated, and the electrolytic device can be operated without supplying water to the electrolytic device from the outside.

This arrangement can be appropriately combined with another arrangement.

### [Example]

### (Example 1)

The electrolytic device illustrated in FIG. 1 was assembled to examine carbon dioxide electrolysis performance. First, the cathode 121, in which carbon particles supporting gold nanoparticles were coated on a carbon paper provided with a porous layer, was fabricated by the following procedure. A coating solution was prepared by mixing carbon particles supporting gold nanoparticles with pure water, a Nafion solution, and ethylene glycol. An average particle diameter of the gold nanoparticles was 8.7 nm, and a supporting amount was 18.9 mass%. The coating solution was filled into an airbrush and spray-coated onto the carbon paper provided with the porous layer by using a nitrogen gas. After the coating, this was washed under running water with pure water for 30 minutes, and then immersed in a hydrogen peroxide solution to oxidize and remove organic substances such as ethylene glycol. This was cut out to a size of 10 cm × 10 cm to be used as the cathode 121. A coating amount of gold was estimated to be about 0.4 mg/cm² based on the amount of gold nanoparticles and carbon particles mixed in the coating solution. For the anode 111, an electrode in which IrO₂ nanoparticles being an anode catalyst were coated on Ti mesh was used. The IrO₂/Ti mesh electrode was cut out to a size of 10 cm × 10 cm to be used as the anode 111.

The electrolytic part 100 performed an electrolytic reaction, in which the cooling flow path 141 was formed in a stack of 10 electrolysis cells each having a catalyst area of 100 cm² and a current density of 200 mA/cm². The thickness of one electrolysis cell was 2 mm. The thickness of the flow path plate 153 including the cooling flow path 141 was 6 mm. The depth of the anode flow path 112 was 1.0 mm. The depth of the cooling flow path 141 was 5 mm.

No cooling flow path was provided in clamping plates, and a clamping plate, an insulating plate, a 1 mm current collector plate, a stack of the flow path plate 153 including the cooling flow path 141 and the electrolysis cells, a 1 mm current collector plate, an insulating plate, and a clamping plate were stacked in this order.

The electrolytic device was assembled using the above-described electrolytic part 100, and operated under the following conditions. A potassium hydrogen carbonate solution (concentration of 0.1 M KHCO₃), being an electrolytic solution, was supplied to the anode flow path 112 at a flow rate of 10 ccm per one electrolysis cell. The operation was performed by feeding the above-described electrolytic solution cooled to a temperature of 25°C at a current density of 200 mA/cm². The reaction was caused by supplying the electrolytic solution to the anode flow path 112 at a flow rate of 2.5 ccm/cell.

Cooling water was fed from an external cooling water supply source to the cooling flow path 141 so as to make the temperature of the electrolysis cell fall within the range of 50°C to 60°C. Water having a temperature of 25°C was fed as cooling water for cooling, and the temperature was controlled by adjusting the flow rate.

A carbon dioxide gas was supplied to the cathode flow path 122 at a flow rate of 500 sccm per one electrolysis cell. The carbon dioxide gas was humidified through the humidifier 302. The carbon dioxide gas supplied to the humidifier 302 was humidified by bubbling in hot water. The entire humidifier 302 was kept warm, and the carbon dioxide gas was supplied to the electrolytic part 100 by controlling the temperature of the carbon dioxide gas by the humidifier 302 and the hot water temperature. The temperature of the humidified carbon dioxide gas was controlled to be lower than the temperature of the electrolysis cell within the range of 40°C to 50°C.

A first glass bottle with a volume of 1 L was installed as the cathode collector 401 to separate the liquid (cathode discharge liquid), generated CO, and unreacted CO gas (cathode exhaust gas). A part of the cathode exhaust gas was collected, and the amount of carbon monoxide or hydrogen gas produced by the reduction reaction of the carbon dioxide or the reduction reaction of the water was analyzed by a gas chromatograph. Partial current densities of carbon monoxide and hydrogen and Faradaic efficiency, which is a ratio of the total current density to the partial current density, were calculated from the production amount of gas by the control part 700. Results are illustrated in Table 1. Table 1 illustrates a cell voltage, cell resistance, Faradaic efficiency of carbon monoxide (F. E. (CO)), and Faradaic efficiency of hydrogen (F. E. (H₂)). The sum of F. E. (CO) and F. E. (H₂) may exceed 100% due to measurement errors caused by the influence of flow rate or the like.

A second glass bottle with a volume of 5 L was installed as the anode collector 201 to separate the anode discharge liquid and the anode exhaust gas. The separated anode exhaust gas was cooled and the water vapor was condensed to produce anode condensed water, and the anode condensed water was captured in a third glass bottle with a volume of 1 L as the condensed water collector 502.

The third glass bottle was connected to the humidifier 302 via a heat exchanger by piping, and the anode condensed water stored in the third glass bottle was fed by a pump. The heat exchanger was also connected between the anode collector 201 and the electrolysis cell, and heat was exchanged between the anode condensed water in the third glass bottle and the hot anode discharge liquid in the anode collector 201 to cool the anode discharge liquid. The anode condensed water in the third glass bottle was supplied by the pump at regular intervals when the anode condensed water was stored. In addition, the electrolytic device 1 was operated at a current density of 200 mA/cm².

During the operation of the pump that makes the anode condensed water move from the third glass bottle, the temperature of the third glass bottle was 18°C and the temperature of the anode condensed water supplied to the humidifier 302 (temperature of the anode condensed water flowing through the discharge flow path P10) was 35°C. At this time, the flow rate of the cooling water flowing through the cooling flow path 141 decreased from about 20 cc/min on average to 5 cc/min.

The potassium concentration in the anode discharge liquid in the anode collector 201 and the amount of increase or decrease in the anode discharge liquid were measured at regular intervals. Table 1 illustrates the results of the potassium concentration in the anode discharge liquid and the amount of increase or decrease in the anode discharge liquid. As the operating time elapsed, the amount of increase or decrease in the anode discharge liquid increased (the anode discharge liquid increased) and the operation was impossible without draining from the anode collector 201, and thus, the reaction was stopped after 400 hours.

### (Comparative example 1)

A cooler was provided between the outlet of the anode flow path 112 of the electrolysis cell and the anode collector 201. The anode exhaust gas was discharged directly from the anode collector 201 without providing the third glass bottle. Comparative example 1 did not include a mechanism to supply water or an electrolytic solution to the humidifier 302. Other than this, Comparative example 1 is the same as Example 1. Table 1 illustrates the results.

The temperature of the anode discharge liquid in the anode collector 201 was 55°C during the operation at a current density of 200 mA/cm². At this time, the flow rate of the cooling water flowing through the cooling flow path 141 was always around 20 ± 5 cc/min. Table 1 illustrates the results of the potassium concentration in the anode discharge liquid and the amount of increase or decrease in the anode discharge liquid. As the operating time elapsed, the amount of increase or decrease in the anode discharge liquid increased (the anode discharge liquid increased) and the operation was impossible without draining from the anode collector 201, and thus, the reaction was stopped after 250 hours.

### (Comparative example 2)

A cooler was provided between the outlet of the anode flow path 112 of the electrolysis cell and the anode collector 201. The anode condensed water was supplied from the third glass bottle to the humidifier 302 at regular intervals. Other than this, Comparative example 2 is the same as Example 1. Table 1 illustrates the results.

The temperature of the anode discharge liquid in the anode collector 201 was 55°C during the operation at a current density of 200 mA/cm². At this time, the flow rate of the cooling water flowing through the cooling flow path 141 was always around 20 ± 5 cc/min. Table 1 illustrates the results of the potassium concentration in the anode discharge liquid and the amount of increase or decrease in the anode discharge liquid. As the operating time elapsed, the amount of increase or decrease in the anode discharge liquid increased (the anode discharge liquid increased) and the operation was impossible without draining from the anode collector 201, and thus, the reaction was stopped after 250 hours.

### (Comparative example 3)

A cooler was provided in the middle of the circulation flow path P7, and the reaction was performed by cooling the anode discharge liquid. Other than this, Comparative example 3 is the same as Example 1. Table 1 illustrates the results. As the operating time elapsed, the amount of decrease in the hot water in the humidifier 302 increased to make the humidification operation impossible, and the amount of increase or decrease in the anode discharge liquid increased (the anode discharge liquid increased) and the operation was impossible without draining from the anode collector 201, and thus, the reaction was stopped after 210 hours.

### (Example 2)

The first glass bottle and the second glass bottle were connected by a pipe, and a pump was connected in the middle of the pipe to move the cathode discharge liquid to the anode collector 201. Other than this, Example 2 is the same as Example 1. Table 1 illustrates the results.

During the operation of the pump that makes the anode condensed water move from the third glass bottle, the temperature of the third glass bottle was 18°C and the temperature of the anode condensed water supplied to the humidifier 302 was 35°C. At this time, the flow rate of cooling water flowing through the cooling flow path 141 decreased from about 20 cc/min on average to 5 cc/min. The potassium concentration in the anode discharge liquid in the anode collector 201 and the amount of increase or decrease in the anode discharge liquid were measured at regular intervals. Table 1 illustrates the results of the potassium concentration in the anode discharge liquid and the amount of increase or decrease (increase) in the anode discharge liquid. In Example 2, the operation was able to be continued for up to 500 hours.

### (Example 3)

A cooler to cool the cathode exhaust gas discharged from the first glass bottle was provided, water vapor was condensed to produce cathode condensed water, and the cathode condensed water was captured in a fourth glass bottle with a volume of 1 L. The cooler includes double pipes, with cooling water flowing through the outer pipe and the cathode exhaust gas flowing through the inner pipe.

The fourth glass bottle was connected to the outer pipe of the cooler. Further, the outlet of the outer pipe was connected to the inlet of the cooling flow path 141 and the cathode condensed water was supplied to the cooling flow path 141. The cathode condensed water, which was warmed by the cathode exhaust gas and the electrolysis cell, was supplied to the humidifier 302 at regular intervals by a pump. Other than this, Example 3 is the same as Example 1. Table 1 illustrates the results.

During the operation of the pump that makes the anode condensed water move from the third glass bottle, the temperature of the third glass bottle was 18°C and the temperature of the anode condensed water supplied to the humidifier 302 was 40°C. At this time, the flow rate of cooling water flowing through the cooling flow path 141 decreased from about 20 cc/min on average to 5 cc/min. The potassium concentration in the anode discharge liquid in the anode collector 201 and the amount of increase or decrease in the anode discharge liquid were measured at regular intervals. Table 1 illustrates the results of the potassium concentration in the anode discharge liquid and the amount of increase or decrease (increase) in the anode discharge liquid. In Example 3, the operation was able to be continued for up to 500 hours.

### (Example 4)

The second glass bottle with a volume of 5 L was installed as the anode collector 201 to separate the anode discharge liquid and the anode exhaust gas. The anode exhaust gas was cooled to condense water vapor to produce anode condensed water, and the anode condensed water was captured in the third glass bottle with a volume of 1 L. A cooler was installed in the third glass bottle to cool the internal anode condensed water. The temperature of the internal anode condensed water was controlled at 18°C ± 1°C.

The first glass bottle with a volume of 5 L was installed as the cathode collector 401 to separate the cathode discharge liquid and the cathode exhaust gas. The cooler condensed water vapor in the cathode exhaust gas to produce cathode condensed water, and the cathode condensed water was captured in the fourth glass bottle with a volume of 1 L. The cooler includes double pipes, with cooling water flowing through the outer pipe and the cathode exhaust gas flowing through the inner pipe.

A part of the anode condensed water stored in the third glass bottle was supplied to the cooling pipe for the cathode exhaust gas by a pipe and another part thereof was supplied to the cooling flow path 141. Then, the remainder was supplied to the discharge flow path P10. The connection of the cooling water to three locations can be switched by valves. When the temperature of the electrolysis cell is high, more cooling water is supplied to the electrolysis cell, and when the temperature of the electrolysis cell is low, less cooling water is supplied to the electrolysis cell to control the temperature of the electrolysis cell to be in the range of 50°C to 60°C. The temperature of the cathode exhaust gas was controlled to be about 20°C. When both the electrolysis cell and the cathode exhaust gas had a high temperature, the anode condensed water was supplied to the discharge flow path P10. A part of the anode condensed water was supplied to the humidifier 302 from the discharge flow path P10 by a pump, and the remainder was supplied to the third glass bottle using a pipe and a valve. Further, the supply destination of the anode condensed water was controlled by a water level gauge in the third glass bottle and a water level gauge in the humidifier 302. Other than this, Example 4 is the same as Example 1. Table 1 illustrates the results.

The temperature of the anode condensed water supplied to the humidifier 302 was 38°C. At this time, the flow rate of the cooling water flowing through the cooling flow path 141 was always about 3 ± 2 cc/min. The potassium concentration in the anode discharge liquid in the anode collector 201 and the amount of increase or decrease (increase) in the anode discharge liquid were measured at regular intervals. Table 1 illustrates the results of the potassium concentration in the anode discharge liquid and the amount of increase or decrease in the anode discharge liquid. In Example 4, the operation was able to be continued for up to 500 hours.

The results of Examples 1, 2, 3, and 4 and Comparative examples 1, 2, and 3 reveal that the anode condensed water and the cathode condensed water are produced and heat is exchanged between these condensed waters and the anode solution or anode discharge liquid, thereby making it possible to inhibit the increase in anode discharge liquid and inhibit the decrease in electrolysis efficiency with the increase in operating time.

**[Table 1]**

| Operating time | | Exam. 1 | Exam. 2 | Exam. 3 | Exam. 4 | Comp. Exam. 1 | Comp. Exam. 2 | Comp. Exam. 3 |
|---|---|---|---|---|---|---|---|---|
| 10h | Cell voltage (V) | 2.75±0.07 | 2.73±0.04 | 2.73±0.05 | 2.75±0.08 | 2.74±0.05 | 2.74±0.04 | 2.74±0.06 |
| | Cell resistance (mΩ) | 210 | 210 | 210 | 210 | 212 | 212 | 211 |
| | F.E.(CO) (%) | 982 | 98.3 | 98.1 | 98.4 | 98.2 | 98.2 | 98.3 |
| | F.E.(H₂)(%) | 2.0 | 2.1 | 2.2 | 2.1 | 2.0 | 2.0 | 2.1 |
| | K concentration (mM) | 100 | 100 | 100 | 100 | 100 | 100 | 100 |
| | Amount of increase or decrease in anode waste liquid (L) | 0 | 0 | 0 | 0 | 0 | 0 | 0 |
| 100h | Cell voltage (V) | 3.15±0.2 | 3.13±0.18 | 3.13±0.2 | 3.05±0.1 | 3.21±0.25 | 3.21±0.25 | 3.16±0.22 |
| | Cell resistance (mΩ) | 267 | 220 | 220 | 223 | 270 | 271 | 269 |
| | F.E.(CO) (%) | 96.5 | 97.2 | 97.0 | 97.0 | 92.5 | 93.0 | 95.0 |
| | F.E.(H₂)(%) | 2.2 | 2.2 | 2.3 | 2.1 | 4.0 | 4.5 | 3.8 |
| | K concentration (mM) | 75 | 92 | 92 | 92 | 68 | 68 | 76 |
| | Amount of increase or decrease in anode waste liquid (L) | 1.5 | 1.7 | 1.7 | 0.8 | 2.0 | 2.0 | 1.7 |
| 200h | Cell voltage (V) | 3.18±0.12 | 3.14±0.09 | 3.16±0.10 | 3.16±0.11 | 3.40±0.27 | 3.40±0.27 | 3.19±0.15 |
| | Cell resistance (mΩ) | 261 | 235 | 237 | 261 | 320 | 318 | 263 |
| | F.E.(CO) (%) | 94.1 | 96.4 | 96.5 | 94.2 | 88.0 | 87.0 | 93.5 |
| | F.E.(H₂)(%) | 2.8 | 2.4 | 2.3 | 3.9 | 7.0 | 8.0 | 3.2 |
| | K concentration (mM) | 60 | 85 | 86 | 85 | 34 | 36 | 63 |
| | Amount of increase or decrease in anode waste liquid (L) | 3.0 | 3.4 | 3.4 | 1.7 | 4.5 | 4.6 | 3.7 |
| 500h | Cell voltage (V) | - | 3.38±0.17 | 3.41±0.20 | 3.42±0.23 | - | - | - |
| | Cell resistance (mΩ) | - | 275 | 274 | 275 | - | - | - |
| | F.E.(CO) (%) | - | 94.8 | 94.5 | 94.2 | - | - | - |
| | F.E.(H₂)(%) | - | 2.8 | 2.7 | 2.7 | - | - | - |
| | K concentration (mM) | - | 58 | 55 | 56 | - | - | - |
| | Amount of increase or decrease in anode waste liquid (L) | - | 7.4 | 7.4 | 3.9 | - | - | - |

It should be noted that the structures of the above-described arrangements may be employed in combination, or part thereof may be modified. While certain arrangements have been described, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

The above-described arrangements can be summarized into the following clauses.

### (Clause 1)

An electrolytic device, comprising:
an anode configured to oxidize a first substance to produce an oxidation product;
a cathode configured to reduce a second substance to produce a reduction product;
an anode flow path facing on the anode;
a cathode flow path facing on the cathode;
an anode supply flow path connected to an inlet of the anode flow path and configured to supply an anode solution containing the first substance to the anode flow path;
an anode discharge flow path through which an anode fluid flows, the anode fluid being configured to be discharged from an outlet of the anode flow path and the anode fluid including the anode solution and the oxidation product;
a cathode gas supply source configured to supply a cathode gas containing the second substance;
a humidifier configured to humidify the cathode gas;
a cathode supply flow path connected to an inlet of the cathode flow path and configured to supply the humidified cathode gas to the cathode flow path;
a cathode discharge flow path through which a cathode fluid flows, the cathode fluid being configured to be discharged from an outlet of the cathode flow path, and the cathode fluid including the cathode gas and the reduction product;
an anode collector configured to separate the anode fluid supplied from the anode discharge flow path into an anode discharge liquid containing the anode solution and an anode exhaust gas containing the oxidation product;
a first cooler configured to cool the anode exhaust gas supplied from the anode collector to condense a first water vapor in the anode exhaust gas to produce a anode condensed water;
a condensed water collector configured to accommodate the anode condensed water;
a first flow path connecting the anode collector and the anode supply flow path, the first flow path through which the anode solution flows from the anode collector to the anode supply flow path;
a second flow path connecting the condensed water collector and the humidifier, the second flow path through which the anode condensed water flows from the condensed water collector to the humidifier; and
a first heat exchange structure configured to exchange heat between the anode solution flowing through the first flow path and the anode condensed water flowing through the second flow path.

### (Clause 2)

An electrolytic device, comprising:
an anode configured to oxidize a first substance to produce an oxidation product;
a cathode configured to reduce a second substance to produce a reduction product;
an anode flow path facing on the anode;
a cathode flow path facing on the cathode;
an anode supply flow path connected to an inlet of the anode flow path and configured to supply an anode solution containing the first substance to the anode flow path;
an anode discharge flow path through which an anode fluid flows, the anode fluid being configured to be discharged from an outlet of the anode flow path, and the anode fluid including the anode solution and the oxidation product;
a cathode gas supply source configured to supply a cathode gas containing the second substance;
a humidifier configured to humidify the cathode gas;
a cathode supply flow path connected to an inlet of the cathode flow path and configured to supply the humidified cathode gas to the cathode flow path;
a cathode discharge flow path through which a cathode fluid flows, the cathode fluid being configured to be discharged from an outlet of the cathode flow path, and the cathode fluid including the cathode gas and the reduction product;
an anode collector configured to separate the anode fluid supplied from the anode discharge flow path into an anode discharge liquid containing the anode solution and an anode exhaust gas containing the oxidation product;
a first cooler configured to cool the anode exhaust gas supplied from the anode collector to condense a first water vapor in the anode exhaust gas to produce a anode condensed water;
a condensed water collector configured to accommodate the anode condensed water;
a first flow path connecting the anode collector and the anode supply flow path, the first flow path through which the anode solution flows from the anode collector to the anode supply flow path;
a second cooler configured to cool the anode condensed water supplied from the condensed water collector;
a cooling flow path arranged opposite to the anode flow path or the cathode flow path, the cooling flow path through which the anode condensed water supplied via the second cooler flows;
a third flow path connecting an outlet of the cooling flow path and the humidifier, the third flow path through which the anode condensed water flows from the cooling flow path to the humidifier; and
a second heat exchange structure configured to exchange heat between the anode solution flowing through the anode flow path and the anode condensed water flowing through the cooling flow path.

### (Clause 3)

The electrolytic device according to the clause 2, further comprising:
a cathode collector configured to separate the cathode fluid supplied from the cathode discharge flow path into a cathode discharge liquid containing the anode solution and a cathode exhaust gas containing the reduction product, wherein
the second cooler is configured to cool the cathode exhaust gas, to thereby condense a second water vapor in the cathode exhaust gas to produce a cathode condensed water, and
the cooling flow path is where the cathode condensed water supplied via the second cooler together with the anode condensed water flows.

### (Clause 4)

The electrolytic device according to the clause 3, further comprising:
a fourth flow path through which the cathode discharge liquid supplied from the cathode collector to the anode collector flows.

### (Clause 5)

The electrolytic device according to the clause 3 or the clause 4, further comprising:
a fifth flow path through which the anode condensed water supplied from the condensed water collector to the second cooler flows, wherein
the second cooler is configured to cool the cathode exhaust gas using the anode condensed water.

### (Clause 6)

The electrolytic device according to any one of the clause 1 to the clause 5, wherein
the condensed water collector includes a third cooler configured to cool the anode condensed water, and
the first cooler is configured to cool the anode exhaust gas using the anode condensed water cooled by the third cooler.

### (Clause 7)

The electrolytic device according to any one of the clause 2 to the clause 6, wherein
the first cooler is provided in the condensed water collector.

### (Clause 8)

The electrolytic device according to any one of the clause 1 to the clause 7, further comprising:
a flow rate controller configured to control the flow rate of the anode condensed water to be supplied to the humidifier;
a first detector provided in the humidifier, the first detector being configured to detect the water level of a hot water in the humidifier and transmit a first detection signal, and the hot water containing the anode condensed water; and
a control device configured to control the flow rate controller based on the first detection signal to adjust the flow rate of the anode condensed water to be supplied to the humidifier.

### (Clause 9)

The electrolytic device according to any one of the clause 2 to the clause 8, further comprising:
a flow rate controller configured to control the flow rate of the anode condensed water to be supplied to the humidifier;
a first detector provided in the humidifier, the first detector being configured to detect the water level of a hot water in the humidifier and transmit a first detection signal, and the hot water containing the anode condensed water;
a control device configured to control the flow rate controller based on the first detection signal to adjust the flow rate of the anode condensed water to be supplied to the humidifier;
a sixth flow path connecting the third flow path and the condensed water collector;
a first valve provided in the middle of the sixth flow path;
a second valve provided in the middle of the third flow path; and
a second detector being configured to detect the water level of the anode condensed water in the condensed water collector and transmit a second detection signal, wherein
the control device is configured to control the first valve and the second valve based on the second detection signal to select whether to supply the anode condensed water to the humidifier or to the condensed water collector.

### (Clause 10)

The electrolytic device according to any one of the clause 1 to the clause 9, further comprising:
an electrolytic solution supply source configured to resupply an electrolytic solution to the anode discharge liquid in the anode collector.

### (Clause 11)

The electrolytic device according to any one of the clause 1 to the clause 10, further comprising:
a water supply source configured to supply water to the humidifier.

## Claims

1. An electrolytic device, comprising:
an anode configured to oxidize a first substance and thus produce an oxidation product;
a cathode configured to reduce a second substance and thus produce a reduction product;
an anode flow path facing on the anode;
a cathode flow path facing on the cathode;
an anode supply flow path connected to an inlet of the anode flow path and configured to supply an anode solution containing the first substance to the anode flow path;
an anode discharge flow path through which an anode fluid flows, the anode fluid being configured to be discharged from an outlet of the anode flow path, and the anode fluid including the anode solution and the oxidation product;
a cathode gas supply source configured to supply a cathode gas including the second substance;
a humidifier configured to humidify the cathode gas;
a cathode supply flow path connected to an inlet of the cathode flow path and configured to supply the humidified cathode gas to the cathode flow path;
a cathode discharge flow path through which a cathode fluid flows, the cathode fluid being configured to be discharged from an outlet of the cathode flow path, and the cathode fluid including the cathode gas and the reduction product;
an anode collector configured to separate the anode fluid to be supplied from the anode discharge flow path into an anode discharge liquid including the anode solution and an anode exhaust gas including the oxidation product;
a first cooler configured to cool the anode exhaust gas supplied from the anode collector to condense a first water vapor in the anode exhaust gas to produce a anode condensed water;
a condensed water collector configured to accommodate the anode condensed water;
a first flow path connecting the anode collector and the anode supply flow path, the first flow path through which the anode solution flows from the anode collector to the anode supply flow path;
a second flow path connecting the condensed water collector and the humidifier, the second flow path through which the anode condensed water flows from the condensed water collector to the humidifier; and
a first heat exchange structure configured to exchange heat between the anode solution flowing through the first flow path and the anode condensed water flowing through the second flow path.

2. The electrolytic device according to claim 1, further comprising:
a second cooler configured to cool the anode condensed water supplied from the condensed water collector;
a cooling flow path arranged opposite to the anode flow path or the cathode flow path, the cooling flow path through which the anode condensed water supplied via the second cooler flows;
a third flow path connecting an outlet of the cooling flow path and the humidifier, the third flow path through which the anode condensed water flows from the cooling flow path to the humidifier; and
a second heat exchange structure configured to exchange heat between the anode solution flowing through the anode flow path and the anode condensed water flowing through the cooling flow path.

3. The electrolytic device according to claim 2, further comprising:
a cathode collector configured to separate the cathode fluid supplied from the cathode discharge flow path into a cathode discharge liquid containing the anode solution and a cathode exhaust gas containing the reduction product, wherein
the second cooler is configured to cool the cathode exhaust gas to condense a second water vapor in the cathode exhaust gas and thus produce a cathode condensed water, and
the cooling flow path is where the cathode condensed water supplied via the second cooler together with the anode condensed water flows.

4. The electrolytic device according to claim 3, further comprising:
a fourth flow path through which the cathode discharge liquid supplied from the cathode collector to the anode collector flows.

5. The electrolytic device according to claim 3 or claim 4, further comprising:
a fifth flow path through which the anode condensed water supplied from the condensed water collector to the second cooler flows, wherein
the second cooler is configured to cool the cathode exhaust gas using the anode condensed water.

6. The electrolytic device according to any one of claim 1 to claim 5, wherein
the condensed water collector includes a third cooler configured to cool the anode condensed water, and
the first cooler is configured to cool the anode exhaust gas using the anode condensed water cooled by the third cooler.

7. The electrolytic device according to any one of claim 2 to claim 6, wherein
the first cooler is provided in the condensed water collector.

8. The electrolytic device according to any one of claim 1 to claim 7, further comprising:
a flow rate controller configured to control the flow rate of the anode condensed water to be supplied to the humidifier;
a first detector provided in the humidifier, the first detector being configured to detect the water level of a hot water in the humidifier and transmit a first detection signal, and the hot water containing the anode condensed water; and
a control device configured to control the flow rate controller based on the first detection signal to adjust the flow rate of the anode condensed water to be supplied to the humidifier.

9. The electrolytic device according to any one of claim 2 to claim 8, further comprising:
a flow rate controller configured to control the flow rate of the anode condensed water to be supplied to the humidifier;
a first detector provided in the humidifier, the first detector being configured to detect the water level of a hot water in the humidifier and transmit a first detection signal, and the hot water containing the anode condensed water;
a control device configured to control the flow rate controller based on the first detection signal to adjust the flow rate of the anode condensed water to be supplied to the humidifier;
a sixth flow path connecting the third flow path and the condensed water collector;
a first valve provided in the middle of the sixth flow path;
a second valve provided in the middle of the third flow path; and
a second detector being configured to detect the water level of the anode condensed water in the condensed water collector and transmit a second detection signal, wherein
the control device is configured to control the first valve and the second valve based on the second detection signal to select whether to supply the anode condensed water to the humidifier or to the condensed water collector.

10. The electrolytic device according to any one of claim 1 to claim 9, further comprising:
an electrolytic solution supply source configured to resupply an electrolytic solution to the anode discharge liquid in the anode collector.

11. The electrolytic device according to any one of claim 1 to 10, further comprising:
a water supply source configured to supply water to the humidifier.

12. The electrolytic device according to claim 2, further comprising:
a first plate having the anode flow path; and
a second plate having the cathode flow path, wherein
the cooling flow path is disposed on an opposite side of the first plate from the anode or an opposite side of the second plate from the cathode.

13. The electrolytic device according to any one of claim 1 to claim 12,
wherein
the first substance includes water.

14. The electrolytic device according to any one of claim 1 to claim 13,
wherein
the second substance includes carbon dioxide.

15. The electrolytic device according to any one of claim 1 to claim 13,
wherein
the second substance includes nitrogen.
